# FASCICULE DE BREVET EUROPEEN

(11) **EP 2 962 345 B1**
(45) Date de publication et mention de la délivrance du brevet: **24.06.2020**
(21) Numéro de dépôt: 14710036.6
(22) Date de dépôt: 27.02.2014
(51) Int. Cl.: H01M 4/1391, H01M 10/0525, H01M 10/0562, H01M 10/0585, C23C 14/00, C23D 13/02, H01M 4/36, H01M 4/62, H01M 4/04

(54) **PROCEDE DE FABRICATION D'UNE BATTERIE MONOLITHIQUE ENTIEREMENT SOLIDE**
VERFAHREN ZUR HERSTELLUNG EINER MONOLITHISCHEN FESTSTOFFBATTERIE
PROCESS FOR MANUFACTURING A MONOLITHIC ALL-SOLID-STATE BATTERY

(30) Priorité: 28.02.2013 FR 1351810
(43) Date de publication de la demande: 06.01.2016
(73) Titulaire: I-TEN, 69410 Champagne-au-Mont-d'Or (FR)
(72) Inventeur: GABEN, Fabien, F-69130 Ecully (FR)
(74) Mandataire: Schmidt, Martin Peter
(86) Numéro de dépôt international: PCT/FR2014/050424
(87) Numéro de publication internationale: WO 2014/131997

(56) Documents cités:
- EP-A1- 2 037 527
- EP-A1- 2 939 295
- EP-A1- 2 939 295
- WO-A1-2012/091111
- FR-A1- 2 862 436
- FR-A1- 2 862 436
- JP-A- 2008 103 289
- JP-A- 2008 171 588
- US-A1- 2007 184 345
- US-A1- 2009 065 042
- US-A1- 2009 065 042
- US-A1- 2010 216 032
- ADAM H. WHITEHEAD ET AL: "Current Collectors for Positive Electrodes of Lithium-Based Batteries", JOURNAL OF THE ELECTROCHEMICAL SOCIETY, vol. 152, no. 11, 1 janvier 2005 (2005-01-01), page A2105, XP055490626, ISSN: 0013-4651, DOI: 10.1149/1.2039587
- ADAM H. WHITEHEAD ET AL: "Current Collectors for Positive Electrodes of Lithium-Based Batteries", JOURNAL OF THE ELECTROCHEMICAL SOCIETY, vol. 152, no. 11, 1 January 2005 (2005-01-01), page A2105, XP055490626, ISSN: 0013-4651, DOI: 10.1149/1.2039587

## Description

### Domaine de l'invention

La présente invention se rapporte au domaine des batteries et notamment des batteries à ions de lithium. Elle concerne plus particulièrement les batteries à ions de lithium (« batteries Li-ion ») entièrement solides, et un nouveau procédé de fabrication de telles batteries.

### Etat de la technique

Les modes de fabrication des batteries à ions de lithium (« batteries Li-ion ») sont présentés dans de nombreux articles et brevets, notamment dans les demandes JP 2008 171 588 A et JP 2008 103 289 A. L'ouvrage « Advances in Lithium-Ion Batteries » (ed. W. van Schalkwijk et B. Scrosati), paru en 2002 (Kluever Academic / Plenum Publishers) en donne un bon état des lieux. Les électrodes des batteries Li-ion peuvent être fabriquées à l'aide de techniques d'impression ou de dépôt connues de l'homme du métier (notamment : enduction au rouleau (« roll coating »), racle (« doctor blade »), « tape casting »). Ces techniques permettent de réaliser des électrodes d'épaisseur comprise entre 50 et 400 µm. En fonction de l'épaisseur de l'électrode, de sa porosité et de la taille des particules des matériaux actifs, la puissance et l'énergie de la batterie peuvent être modulées.

Plus récemment, d'autres architectures de batteries Li-ion sont apparues. Il s'agit principalement des microbatteries en couches minces, entièrement solides. Ces microbatteries sont d'architectures planaires, c'est-à-dire qu'elles sont essentiellement constituées d'un ensemble de trois couches formant une cellule élémentaire de batterie : une couche d'anode et une couche de cathode séparées par une couche d'électrolyte. Ces batteries sont dites « entièrement solide » ou « tout-solide » car les deux électrodes (anode et cathode) et l'électrolyte sont constitués de matériaux solides non poreux. Ces batteries présentent un intérêt important de par leurs performances supérieures à celles des batteries conventionnelles à base d'électrolyte comprenant des sels de lithium dissous dans un solvant aprotique (électrolyte liquide ou sous forme de gel). L'absence d'électrolyte liquide réduit considérablement les risques de court-circuit interne et d'emballement thermique dans la batterie.

Différentes techniques de dépôt sous vide ont été utilisées pour la fabrication de microbatteries en couches minces. En particulier, le dépôt physique par voie vapeur (PVD) est la technologie la plus utilisée actuellement pour la fabrication de ces d'électrodes et d'électrolyte de bonne qualité, sans porosité. Ces couches sont généralement de faible épaisseur (généralement inférieure à 5 µm) afin de ne pas induire une trop grande perte de puissance liée à un accroissement des épaisseurs des électrodes.

De nombreuses approches ont été proposées afin de réaliser des assemblages de batteries entièrement solides. En général, ces approches sont basées uniquement sur la compaction mécanique à forte pression de poudres de matériaux d'électrodes et d'électrolyte (Journal of Power Sources, 2009, 189, 145-148, H. Kitaura). Néanmoins, les couches d'électrodes et d'électrolyte obtenues sont poreuses et l'adhésion entre ces dernières n'est pas optimale si bien que la résistance interne de ces batteries est trop élevée et ne permet pas de délivrer une forte puissance.

Afin d'améliorer les performances des batteries entièrement solides, plusieurs techniques de frittage ont été utilisées, soit en utilisant des traitements thermiques (Journal of Power Sources, 2007, 174, K. Nagata) soit par courant pulsé (Material Research Bulletin, 2008, X. Xu). Cependant, le frittage donne lieu à un rétreint important et/ou à l'utilisation d'une température élevée. Par conséquent, il n'est pas possible de réaliser le dépôt d'électrode entièrement solide sur des substrats conducteurs métalliques, et plus particulièrement des substrats en aluminium. En effet, une température trop élevée oxyderait ou détériorerait fortement le substrat métallique. De plus, la couche déposée sur le substrat conduirait à l'apparition de fissures lors du frittage. Ces inconvénients imposent que les collecteurs de courant doivent être déposés sur les extrémités de la cellule de la batterie constituée d'un empilement cathode/électrolyte/anode. Par conséquent, la restriction liée au dépôt des collecteurs de courant ne permet pas de réaliser un assemblage d'une batterie tridimensionnelle, entièrement solide, à corps monolithique, constituée de plusieurs cellules élémentaires.

La présente invention a donc pour but de fabriquer une batterie Li-ion entièrement solide à corps monolithique, le corps monolithique étant constitué de plusieurs cellules élémentaires, en réalisant des dépôts denses d'électrodes directement sur les deux faces d'un substrat servant de collecteur de courant de batterie, et en déposant une couche dense entièrement solide d'électrolyte sur au moins un des dépôts d'électrodes denses obtenus.

### Objets de l'invention

La présente invention a pour objet un procédé de fabrication de batteries entièrement solides, lesdites batteries comprenant au moins une couche dense contenant des matériaux d'anode (« couche d'anode »), au moins une couche dense contenant des matériaux d'anode (« couche d'anode »), au moins une couche dense contenant des matériaux d'électrolyte solide (« couche d'électrolyte »), et au moins une couche dense contenant des matériaux de cathode (« couche de cathode ») pour obtenir une batterie entièrement solide constituée d'un assemblage de plusieurs cellules élémentaires , procédé comprenant les étapes suivantes :
a) on dépose une couche dense d'anode et une couche dense de cathode chacune sur son substrat conducteur, lesdits substrats conducteurs pouvant servir comme collecteur de courant anodique et cathodique respectivement ;
b) on dépose une couche dense d'électrolyte solide sur au moins une des deux couches obtenues à l'étape a) ;
c) on dépose une couche contenant au moins un matériau de liaison Ms sur l'une au moins des couches denses obtenues à l'étape a) et/ou b) ; étant entendu que les dépôts des couches de l'étape a) et b) ne sont pas tous réalisés par électrophorèse ;
d) on empile face sur face la couche obtenue à l'étape c) avec une couche obtenue à l'étape a), b) ou c) ;
e) on effectue un traitement thermique et/ou une compression mécanique, favorisant le contact entre lesdites deux couches empilées face sur face, pour obtenir un assemblage entièrement solide de cellules élémentaires, pouvant fonctionner comme une batterie.

De préférence, le dépôt de la couche d'anode et de cathode est réalisé sur les deux faces de leur substrat conducteur respectif.

Dans un mode de réalisation préférentiel, le traitement thermique réalisé à l'étape e) est effectué à une température T_{R} qui, de préférence, ne dépasse pas 0,7 fois la température de fusion ou de décomposition (exprimée en °C), et plus préférentiellement ne dépasse pas 0,5 fois (et encore plus préférentiellement ne dépasse pas 0,3 fois) la température de fusion ou de décomposition (exprimée en °C) du au moins un matériau de matériau de liaison Ms le plus fusible soumis à ladite étape de traitement thermique. De même, la compression mécanique de l'assemblage obtenu à l'étape e) est réalisée à une pression comprise entre 10 et 100 MPa, de préférence entre 10 et 50 MPa.

Les dépôts des couches de l'étape a), b) et c) sont réalisés par phase vapeur et/ou par voie humide, et plus particulièrement parmi au moins l'une des techniques suivantes :
ii) dépôt chimique par phase vapeur (CVD), et plus particulièrement assisté par plasma (PECVD), assisté par laser (LACVD), ou assisté par aérosol (AA-CVD) ;
iii) électropulvérisation ;
iv) aérosol déposition.
v) électrophorèse ;
vi) sol-gel ;
vii) trempage, plus particulièrement par trempage-retrait (dip-coating), trempage-tournette (spin-coating), ou par le procédé Langmuir-Blodgett.

Le matériau de liaison Ms est préférentiellement sélectionné parmi un ou plusieurs des matériaux suivants :
a) les matériaux à base d'oxydes choisis parmi Li_{3,6}Ge_{0,6}V_{0,4}O₄ ; Li₂O-Nb₂O₅ ; LiSiO₄ ; Li₂O ; Liᵢ₄Zn(GeO₄)₄ ; Li₆Zr₂O₇ ; Li₈ZrO₆ ; Li_{0,35}La_{0,55}TiO₃ ; Li_{0,5}La_{0,5}TiO₃; Li₇La₃Zr₂O₁₂ ; Li₅₊ₓLa₃(Zrₓ,A₂₋ₓ)O₁₂ avec A=Sc, Ti, V, Y, Nb, Hf, Ta, Al, Si, Ga, Ge, Sn et 1,4 ≤ x ≤ 2 ;
b) les matériaux à base de nitrures ou d'oxynitrures choisis parmi Li₃N; Li₃PO₄-ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium et de phosphore (appelés LiPON) pouvant également contenir du silicium (appelés LiSiPON), du bore (appelés LiPONB), du soufre (appelés LiPONS), du zirconium, ou de l'aluminium (appelés LiPAON) ou une combinaison d'aluminium, bore, soufre et/ou silicium ; les matériaux à base d'oxynitrures de lithium et de bore (appelés LiBON) pouvant également contenir du silicium (appelés LiSiBON), du soufre (appelés LiBONS) ou de l'aluminium (appelés LiBAON) ou une combinaison d'aluminium, soufre et silicium ; et plus particulièrement les matériaux du type LiₓPO_{y}N_{z} avec x ∼2,8 et 2y = 3z avec 0,16 ≤ z ≤ 0,46 ; ou Li_{w}POₓN_{y}S_{z} avec (2x+3y+2z) = (5+w) et 3,2 ≤ x ≤ 3,8 ; 0,13 ≤ y ≤ 0,4 ; 0 ≤ z ≤ 0,2 ; 2,9 ≤ w ≤ 3,3 ; ou LiₜPₓAl_{y}OᵤNᵥS_{w} avec (5x+3y) =5 ; (2u+3v+2w) = (5+t) ; 2,9≤ t ≤3,3 ; 0,84≤ x ≤0,94 ; 0,094≤ y ≤0,26 ; 3,2≤ u ≤3,8 ; 0,13≤ v ≤0,46 ; 0≤ w ≤0,2 ; ou Li_{1,9}Si_{0,2}P_{1,0}O_{1,1}N_{1,0} ; ou Li_{2,9}PO_{3,3}N_{0,46} ; ou Li_{6-0,75x}P_{1,75x}Zr₂₋₂ₓO_{7-y}N_{z} avec z ≤ 14/3 ; 2y = 3z et x ≤ 0,8 ; ou Li_{8-3,5x}P_{1,5x}Zr₁₋ₓO_{6-y}N_{z} avec x ≤ 0,8 ; z ≤ 4 et 2y = 3z ; ou Li₈₋₃ₓLaₓZrO_{6-y}N_{z} avec 0 < x ≤ 2 ; z ≤ 4 et 2y = 3z ; ou Li₃(Sc₂₋ₓMₓ)(PO_{4-y}N_{z}) avec x ≤ 2 ; z ≤ 8/3 ; 2y = 3z et M=Al, Y ou Al₁₋ₐYₐ avec a<1 ;
c) les matériaux à base de sulfure choisis parmi LiₓM_{1-y}M'_{y}S₄ avec M=Si, Ge, Sn et M'=P, Al, Zn, Ga, Sb ; Li₂S ; B₂S₃ ; P₂S₅ ; 70Li₂S-30P₂S₅ ; Li₇P₃S₁₁ ; Li₁₀GeP₂S₁₂ ; Li₇PS₆ ; Li_{3,25}Ge_{0,25}P_{0,75}S₄ ; Li₁₀MP₂S₁₂ avec M = Si, Ge, Sn et les mélanges entre Li₂S et un des composés parmi P₂S₅, GeS₂, Ga₂S₃ ou SiS₂ ;
d) les matériaux à base de phosphate ou de borate choisis parmi Li₃PO₄ ; LiTi(PO₄)₃ ; Li₁₊ₓAlₓM₂₋ₓ(PO₄)₃ (où M = Ge, Ti, et/ou Hf et où 0 < x < 1) ; Li_{1,3}Al_{0,3}Ti_{1,7}(PO₄)₃ ; Li_{1+x+y}AlₓTi₂₋ₓSi_{y}P_{3-y}O₁₂ (où 0 ≤ x ≤ 1 et 0 ≤ y ≤ 1); Li_{1+x+z}Mx(Ge_{1-y}Ti_{y})₂₋ₓSi_{z}P_{3-z}O₁₂ (où 0 ≤ x ≤ 0,8, 0 ≤ y ≤ 1,0, 0 ≤ z ≤ 0,6) ; 2(Li_{1,4}Ti₂Si_{0,4}P_{2,6}O₁₂)-AlPO₄ ; LiₓAl_{z-y}Ga_{y}S_{w}(PO₄)_{c} ou LiₓAl_{z-y}Ga_{y}S_{w}(BO₃)_{c} ou LiₓGe_{z-y}Si_{y}S_{w}(PO₄)_{c} ou LiₓGe_{z-y}Si_{y}S_{w}(BO₃)_{c} ou d'une manière plus générale LiₓM_{z-y}M'_{y}S_{w}(PO₄)_{c} ou LiₓM_{z-y}M'_{y}S_{w}(BO₃)_{c} avec 4 < w < 20, 3 < x <10, 0 ≤ y ≤ 1, 1 ≤ z ≤ 4 et 0 < c < 20 et M ou M' un élément parmi Al, Si, Ge, Ga, P, Zn, Sb ; ou Li₃Sc₂₋ₓMₓPO₄ avec M = Al, Y ou Al₁₋ₐYₐ avec a<1 ;
e) les matériaux mixtes choisis parmi les mélanges entre Li₂S et un des composés parmi Li₃PO₄, Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les mélanges entre soit Li₂S et/ou B₂S₃, SiS₂, P₂S₅, GeS₂, Ga₂S₃ et un composé du type LiₐMO_{b} qui peut être soit un silicate de lithium Li₄SiO₄, un borate de lithium Li₃BO₃ ou un phosphate de lithium Li₃PO₄.

Selon un mode de réalisation particulier, le au moins un matériau de liaison Ms comporte/est constitué d'au moins un polymère pouvant être imprégné d'un sel de lithium, le polymère étant de préférence choisi dans le groupe formé par le polyéthylène oxyde, les polyimides, le polyfluorure de vinylidène, le polyacrylonitrile, le polyméthacrylate de méthyle, les polysiloxanes, et le sel de lithium étant de préférence choisi dans le groupe formé par LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

Avantageusement, l'épaisseur de la couche du au moins un matériau de liaison Ms est inférieure à 100 nm, de préférence inférieure à 50 nm, et encore plus préférentiellement inférieure à 30 nm.

Dans un mode de réalisation préférentiel, la couche contenant au moins un matériau de liaison Ms est une couche de nanoparticules déposée sur l'une au moins des couches denses obtenues à l'étape a) b), ou c). Avantageusement elle est déposée par électrophorèse.

Avantageusement, les substrats conducteurs de courant d'anode de courant de cathode sont des feuilles métalliques, éventuellement revêtues d'un métal noble, ou des feuilles polymères, éventuellement revêtues d'un métal noble, ou des feuilles de graphite, éventuellement revêtues d'un métal noble. Plus particulièrement, les substrats conducteurs de courant d'anode de courant de cathode en feuilles métalliques sont en aluminium, en cuivre ou en nickel. Plus particulièrement, les substrats conducteurs de courant d'anode de courant de cathode en feuilles de polymères sont sélectionnés parmi les polymères suivants : le polynaphtalate d'éthylène (PEN), polytéréphtalate d'éthylène (PET), le polypropylène (PP), le Téflon® (PTFE), le polyimide (PI), et plus particulièrement le Kapton®.

Avantageusement, le métal noble est sélectionné parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

Un autre objet de l'invention concerne une batterie entièrement solide susceptible d'être fabriquée par le procédé selon l'invention, ladite batterie comprenant un corps monolithique formé d'au moins une couche dense contenant des matériaux d'anode, au moins une couche dense contenant des matériaux d'électrolyte solide, et au moins une couche dense contenant des matériaux de cathode ; de préférence le corps monolithique de la batterie est constitué de plusieurs cellules élémentaires connectées en parallèle. De manière avantageuse, la continuité électrique entre deux cellules voisines est assurée par l'électrolyte.

La batterie susceptible d'être obtenue par le procédé selon l'invention peut être une batterie entièrement solide multicouches.

Dans un mode de réalisation de la batterie selon l'invention, ladite batterie comprend au moins une couche d'encapsulation, de préférence une couche en céramique ou en vitrocéramique. Avantageusement, ladite batterie comprend une deuxième couche d'encapsulation déposée sur ladite première couche d'encapsulation, ladite deuxième couche étant de préférence en polymère siliconé.

Avantageusement, la batterie comprend des terminaisons au niveau où les collecteurs de courant cathodique, respectivement anodique, sont apparents. De préférence, les connexions anodiques et les connexions cathodiques se trouvent sur les côtés opposés de l'empilement. Avantageusement, les terminaisons sont revêtues en outre d'une couche de nickel au contact des cellules électrochimiques, ladite couche de nickel étant revêtue d'une couche d'étain.

De préférence, ladite au moins une couche d'encapsulation revêt quatre des six faces de ladite batterie, les deux autres faces de la batterie étant revêtues par les terminaisons.

Dans certains modes de réalisation, la batterie susceptible d'être obtenue par le procédé selon l'invention est entièrement inorganique.

Avantageusement, la batterie obtenue selon l'invention est entièrement inorganique.

### Description des figures

Les figures 1(a), 1(b), 1(c), 1(d), 1(e) et 1(f) montrent les produits pouvant être obtenus selon plusieurs modes de réalisation selon l'invention.
La figure 2 représente un empilement d'une anode et d'une cathode revêtue d'une couche d'électrolyte et d'une couche de matériau de liaison Ms.
La figure 3 représente une batterie susceptible d'être obtenue selon un mode de réalisation du procédé de dépôt selon l'invention.
Les figures 4 et 5 représentent schématiquement les étapes pour fabriquer une batterie selon deux modes de réalisation selon l'invention.
La figure 6 représente de manière schématique un film de cathode (à gauche de la figure) et un film d'anode revêtue d'une couche d'électrolyte (à droite de la figure), les deux films comprenant des motifs découpés par poinçonnage. La flèche noire représente l'opération d'empilement alterné des feuilles de cathode et d'anode revêtue d'électrolyte avec leurs motifs découpés superposés en configuration tête bêche. Le poinçonnage peut être réalisé sur le substrat métallique avant le dépôt des couches d'électrode.
La figure 7 représente de manière schématique un détail de la superposition des feuilles de cathode et d'anode revêtue d'une couche électrolyte résultant de l'empilement illustré en figure 6.
La figure 8 représente une batterie multicouche susceptible d'être obtenu par le procédé selon l'invention, selon un mode particulier de réalisation. Plus particulièrement, la batterie multicouche comprend :
   - plusieurs couches de substrat **20** en feuille métallique, ou en feuille métallique revêtue d'un métal noble, ou en feuille polymère métallisé avec un métal noble, ou en feuille de graphite revêtue d'un métal noble ;
   - plusieurs couches d'électrolyte solide **22** ;
   - plusieurs couches minces d'anode **21** ;
   - plusieurs couches minces de cathode **24** ;
   - plusieurs couches de matériau de liaison Ms (non représentées sur la figure) ;
   - au moins une couche mince d'encapsulation **37** pouvant être constituée soit d'un polymère, soit d'une céramique ou vitrocéramique, pouvant être par exemple sous forme d'oxyde, de nitrure, de phosphates, d'oxynitrure, ou de siloxane. Avantageusement cette couche d'encapsulation comprend une couche de céramique ou vitrocéramique revêtue d'une résine époxy ou de silicone ;
   - des terminaisons **35,36** qui permettent de reprendre les connections électriques alternativement positives et négatives sur chacune des extrémités. Ces terminaisons permettent de réaliser les connections électriques en parallèle entre les différents éléments de batterie. Pour cela, seule les connections (+) sortent sur une extrémité, et les (-) sont disponibles sur les autres extrémités. De manière préférentielle les connections (+) et (-) sont décalées latéralement et l'encapsulation sert de diélectrique pour éviter la présence de court-circuit sur ces extrémités. Les terminaisons **35,36** sont représentées ici comme une double couche mais peut être réalisée comme une couche simple.

### Description détaillée de l'invention

### 1. Définitions

On entend par batterie « tout solide » (appelée aussi ici batterie « entièrement solide », en anglais « all solid-state battery »), une batterie dont les électrodes et l'électrolyte sont solides et ne comprennent pas de phase liquide, même imprégnée dans la phase solide.

On entend par « batterie tout solide multicouches » au sens de l'invention, une batterie monobloc, constituée par un empilement de plusieurs « cellules élémentaires ». On entend par « cellule élémentaire» au sens de la présente invention, une cellule électrochimique constituée d'une anode et d'une cathode à insertion des ions lithium, séparée par un électrolyte solide conducteur des ions lithium.

On entend par « matériau de liaison Ms » tout matériau conducteur d'ions lithium permettant l'assemblage de la couche d'anode et la couche de cathode, dont au moins une desdites couches d'anode et de cathode est revêtue d'une couche d'électrolyte, traitées thermiquement et/ou compressés mécaniquement, pour former par empilement une batterie tout solide après traitement thermique à basse température et/ou par faible compression mécanique dudit empilement.

Dans certains modes de réalisation selon l'invention, « les batteries sont entièrement inorganiques, i.e. ne comprennent pas de polymère dans les électrodes ou dans l'électrolyte, mais peuvent comprendre du carbone élémentaire (par exemple du graphite). Dans le cadre de la présente invention, on entend par couche « dense » une couche présentant une densité supérieure à 85% de la densité théorique du corps massif, de préférence supérieure à 90% voire supérieure à 95%.

Dans le cadre de la présente invention, la taille d'une particule est sa plus grande dimension. Ainsi, une « nanoparticule » est une particule dont au moins une des dimensions est inférieure à 100 nm. La «taille de particules » ou «taille moyenne de particules » d'une poudre ou d'un ensemble des particules est donnée en D₅₀.

### 2. Description détaillée

### 2.1 Matériaux pour cathode, électrolyte et anode

Selon l'invention, les matériaux utilisés pour la réalisation d'une couche de cathode sont choisis de manière préférée, mais non exhaustive, parmi un ou plusieurs des matériaux suivants :
(i) les oxydes LiMn₂O₄, LiCoO₂, LiNiO₂, LiMn_{1,5}Ni_{0,5}O₄, LiMn_{1,5}Ni_{0,5-x}XₓO₄ (où x est sélectionné parmi Al, Fe, Cr, Co, Rh, Nd, autres terres rares, et où 0 < x < 0,1), LiFeO₂, LiMn_{1/3}Ni_{1/3}Co_{1/3}O₄ ;
(ii) les phosphates LiFePO₄, LiMnPO₄, LiCoPO₄, LiNiPO₄, Li₃V₂(PO₄)₃ ; les phosphates de formule LiMNPO₄, avec M et N (M ≠ N) sélectionnés parmi Fe, Mn, Ni, Co, V ;
(iii) toutes les formes lithiées des chalcogénides suivants : V₂O₅, V₃O₈, TiS₂, TiO_{y}S_{z}, WO_{y}S_{z} , CuS, CuS₂.

Selon l'invention, les matériaux utilisés pour la réalisation d'une couche d'anode sont choisis de manière préférée, mais non exhaustive, parmi un ou plusieurs des matériaux suivants :
(i) les oxynitrures d'étain (de formule typique SnOₓN_{y}) ;
(ii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0,87}O_{1,2}N_{1,72} ; ainsi que les oxynitrures sous la forme SiₐSn_{b}C_{c}O_{y}N_{z} avec a>0, b>0, a+b≤2, 0<c-10, 0<y<24, 0<z<17; SiₐSn_{b}C_{c}O_{y}N_{z}Xₙ et SiₐSn_{b}O_{y}N_{z}Xₙ avec Xₙ étant au moins un des éléments parmi F, Cl, Br, I, S, Se, Te, P, As, Sb, Bi, Ge, Pb;
(iii) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(iv) les oxydes SnO₂, Li₄Ti₅O₁₂, SnB_{0,6}P_{0,4}O_{2,9}.

La couche d'anode peut être également réalisée par tout matériau dont le potentiel d'insertion au lithium est inférieur au potentiel d'insertion du matériau utilisé pour réaliser la couche de cathode. Par exemple, le LiFePO₄ peut être utilisé comme matériau d'anode lorsque on utilise le LiMn_{1,5}Ni_{0,5}O₄ comme matériau de cathode.

Les nanoparticules de Li₄Ti₅O₁₂ pour la réalisation d'une couche d'anode sont plus particulièrement préférées.

Pour la réalisation de l'anode ou de la cathode, on peut ajouter aux matériaux cités précédemment des matériaux conducteurs électroniques, et en particulier de graphite, et/ou des matériaux conducteurs des ions lithium, du type de ceux utilisés pour réaliser les couches d'électrolyte. En effet, certains matériaux d'électrode sont de mauvais conducteurs ioniques et électriques, par conséquent lorsqu'ils sont déposés avec des épaisseurs supérieures à 1 µm, l'électrode peut alors être trop résistive. Or des épaisseurs de 1 à 10 µm sont généralement souhaitables pour les électrodes, afin d'avoir des batteries avec de bonnes densités d'énergie. Dans ce cas il est nécessaire de réaliser un co-dépôt de particules de matériaux d'électrode et de particules conductrices (ioniques et/ou électriques).

L'électrolyte doit être un bon conducteur ionique mais également un isolant électrique. Selon l'invention, les matériaux utilisés pour la réalisation d'une couche d'électrolyte sont choisis de manière préférée parmi un ou plusieurs des matériaux suivants :
a) les matériaux à base d'oxydes choisis parmi Li_{3,6}Ge_{0,6}V_{0,4}O₄ ; Li₂O-Nb₂O₅ ; LiSiO₄ ; Li₂O ; Liᵢ₄Zn(GeO₄)₄ ; Li₆Zr₂O₇ ; Li₈ZrO₆ ; Li_{0,35}La_{0,55}TiO₃ ; Li_{0,5}La_{0,5}TiO₃; Li₇La₃Zr₂O₁₂ ; Li₅₊ₓLa₃(Zrₓ,A₂₋ₓ)O₁₂ avec A=Sc, Ti, V, Y, Nb, Hf, Ta, Al, Si, Ga, Ge, Sn et 1,4 ≤ x ≤ 2 ;
b) les matériaux à base de nitrures ou d'oxynitrures choisis parmi Li₃N; Li₃PO₄-ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium et de phosphore (appelés LiPON) pouvant également contenir du silicium (appelés LiSiPON), du bore (appelés LiPONB), du soufre (appelés LiPONS), du zirconium, ou de l'aluminium (appelés LiPAON) ou une combinaison d'aluminium, bore, soufre et/ou silicium ; les matériaux à base d'oxynitrures de lithium et de bore (appelés LiBON) pouvant également contenir du silicium (appelés LiSiBON), du soufre (appelés LiBONS) ou de l'aluminium (appelés LiBAON) ou une combinaison d'aluminium, soufre et silicium ; et plus particulièrement les matériaux du type LiₓPO_{y}N_{z} avec x ∼2,8 et 2y = 3z avec 0,16 ≤ z ≤ 0,46 ; ou Li_{w}POₓN_{y}S_{z} avec (2x+3y+2z) = (5+w) et 3,2 ≤ x ≤ 3,8 ; 0,13 ≤ y ≤ 0,4 ; 0 ≤ z ≤ 0,2 ; 2,9 ≤ w ≤ 3,3 ; ou LiₜPₓAl_{y}OᵤNᵥS_{w} avec (5x+3y) =5 ; (2u+3v+2w) = (5+t) ; 2,9≤ t ≤3,3 ; 0,84≤ x ≤0,94 ; 0,094≤ y ≤0,26 ; 3,2≤ u ≤3,8 ; 0,13≤ v ≤0,46 ; 0≤ w ≤0,2 ; ou Li_{1,9}Si_{0,2}P_{1,0}O_{1,1}N_{1,0} ; ou Li_{2,9}PO_{3,3}N_{0,46} ; ou Li_{6-0,75x}P_{1,75x}Zr₂₋₂ₓO_{7-y}N_{z} avec z ≤ 14/3 ; 2y = 3z et x ≤ 0,8 ; ou Li_{8-3,5x}P_{1,5x}Zr₁₋ₓO_{6-y}N_{z} avec x ≤ 0,8 ; z ≤ 4 et 2y = 3z ; ou Li₈₋₃ₓLaₓZrO_{6-y}N_{z} avec 0 < x ≤ 2 ; z ≤ 4 et 2y = 3z ; ou Li₃(Sc₂₋ₓMₓ)(PO_{4-y}N_{z}) avec x ≤ 2 ; z ≤ 8/3 ; 2y = 3z et M=Al, Y ou Al₁₋ₐYₐ avec a<1 ;
c) les matériaux à base de sulfure choisis parmi LiₓM_{1-y}M'_{y}S₄ avec M=Si, Ge, Sn et M'=P, Al, Zn, Ga, Sb ; Li₂S ; B₂S₃ ; P₂S₅ ; 70Li₂S-30P₂S₅ ; Li₇P₃S₁₁ ; Li₁₀GeP₂S₁₂ ; Li₇PS₆ ; Li_{3,25}Ge_{0,25}P_{0,75}S₄ ; Li₁₀MP₂S₁₂ avec M = Si, Ge, Sn et les mélanges entre Li₂S et un des composés parmi P₂S₅, GeS₂, Ga₂S₃ ou SiS₂ ;
d) les matériaux à base de phosphate ou de borate choisis parmi Li₃PO₄ ; LiTi(PO₄)₃ ; Li₁₊ₓAlₓM₂₋ₓ(PO₄)₃ (où M = Ge, Ti, et/ou Hf et où 0 < x < 1) ; Li_{1,3}Al_{0,3}Ti_{1,7}(PO₄)₃ ; Li_{1+x+y}AlxTi₂₋ₓSi_{y}P_{3-y}O₁₂ (où 0 ≤ x ≤ 1 et 0 ≤ y ≤ 1); Li_{1+x+z}Mx(Ge_{1-y}Ti_{y})₂₋ₓSi_{z}P_{3-z}O₁₂ (où 0 ≤ x ≤ 0,8, 0 ≤ y ≤ 1,0, 0 ≤ z ≤ 0,6) ; 2(Li_{1,4}Ti₂Si_{0,4}P_{2,6}O₁₂)-AlPO₄ ; LiₓAl_{z-y}Ga_{y}S_{w}(PO₄)_{c} ou LiₓAl_{z-y}Ga_{y}S_{w}(BO₃)_{c} ou Li_{xG}e_{z-y}Si_{y}S_{w}(PO₄)_{c} ou LiₓGe_{z-y}Si_{y}S_{w}(BO₃)_{c} ou d'une manière plus générale LiₓM_{z-y}M'_{y}S_{w}(PO₄)_{c} ou LiₓM_{z-y}M'_{y}S_{w}(BO₃)_{c} avec 4 < w < 20, 3 < x <10, 0 ≤ y ≤ 1, 1 ≤ z ≤ 4 et 0 < c < 20 et M ou M' un élément parmi Al, Si, Ge, Ga, P, Zn, Sb ; ou Li₃SC₂₋ₓMₓPO₄ avec M = Al, Y ou Al₁₋ₐYₐ avec a<1 ;
e) les matériaux mixtes choisis parmi les mélanges entre Li₂S et un des composés parmi Li₃PO₄, Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les mélanges entre soit Li₂S et/ou B₂S₃, SiS₂, P₂S₅, GeS₂, Ga₂S₃ et un composé du type LiₐMO_{b} qui peut être soit un silicate de lithium Li₄SiO₄, un borate de lithium Li₃BO₃ ou un phosphate de lithium Li₃PO₄.

### 2.2 Dépôt des couches d'anode, de cathode et d'électrolyte solide

Selon l'invention, les couches de matériaux d'anode, de cathode et d'électrolyte peuvent être obtenues parmi l'une au moins des techniques de dépôts décrites ci-après.
- Les techniques de dépôt sous vide permettent d'obtenir des couches extrêmement denses directement sur des substrats métalliques pouvant servir comme collecteur de courant anodique et cathodique. Parmi les techniques de dépôt sous vide connu, on peut citer les techniques de dépôts physiques en phase vapeur (PVD), et plus particulièrement par évaporation sous vide, par ablation laser, par faisceau d'ions ou par pulvérisation cathodique ; les techniques de dépôts chimiques en phase vapeur (CVD), et plus particulièrement assisté par plasma (PECVD), assisté par laser (LACVD) ou assisté par aérosol (AA-CVD). Ces techniques de dépôt permettent de réaliser des électrodes (cathode/anode) d'excellent niveau de pureté. Pour garantir le bon fonctionnement des électrodes, les couches déposées doivent être de faible épaisseur, de préférence inférieure à 10 µm, plus préférentiellement inférieure à 5 µm afin de ne pas induire d'effets résistifs selon les matériaux utilisés pour réaliser les couches d'anode et de cathode. De plus, pour des épaisseurs supérieures à 5 µm, le risque est de développer une croissance colonnaire, laquelle conduit à une interface moins régulière.
- Les techniques de dépôts par électropulvérisation peuvent également être avantageusement utilisées pour réaliser un dépôt d'une couche dense contenant des matériaux d'électrode (anode/cathode) et/ou d'électrolyte. Ces couches sont réalisées par pulvérisation de composés chimiques réagissant sous l'influence d'un champ électrique formant en surface une couche mince de matériaux d'électrode et/ou d'électrolyte après séchage. Un exemple de réalisation d'une telle couche est donné dans l'article «The production of thin film of LiMn2O4 by electrospraying», J. of Aerosol Science, Vol.25, n°6, p.1229-1235*.*
- Les dépôts des couches denses contenant des matériaux d'électrode (anode/cathode) et/ou d'électrolyte peuvent aussi être effectués par la technique de dépôt de type « aérosol ». Les nanoparticules de matériau Ms contenues dans un réservoir sont mises en mouvement par l'injection d'un gaz sous pression dans le conteneur. Un dispositif de désagglomération peut être installé sur le jet de particules afin de briser les agglomérats et assurer un flux de particules de tailles contrôlées. En utilisant cette technique de dépôt, il est possible de réaliser des couches d'épaisseurs très variables. De plus, cette technique de dépôt permet de déposer conjointement des particules de matériaux actifs et de matériaux conducteurs ionique et/ou électronique. La densité de la couche déposée par cette technique dépend de la taille des particules, de leur caractère réfractaire et de la vitesse de projection des particules. Par ailleurs, cette technique de dépôt peut être réalisée à basse température et permet de réaliser des dépôts de couche dense d'anode et de cathode directement sur des substrats métalliques, et plus particulièrement des substrats métalliques en aluminium, en cuivre ou en nickel.
- Les techniques de dépôt de type sol-gel peuvent être utilisées pour réaliser des dépôts compacts de couches contenant des matériaux d'électrode (anode/cathode) et/ou d'électrolyte. Cette technique est particulièrement avantageuse pour la réalisation de couches minces d'épaisseur inférieure à 100 nm, de préférence inférieure à 50 nm, et encore plus préférentiellement inférieure à 30 nm. Par ailleurs, il est possible d'utiliser cette technique pour déposer des couches plus épaisses, c'est-à-dire entre 0,1 et 10 µm. Il est alors nécessaire de procéder au dépôt en plusieurs étapes successives par dépôts des couches les unes sur les autres (technique de croissance « layer by layer ») pour éviter la formation de fissuration des couches déposées lorsque ces dernières dépassent une épaisseur critique. Un exemple de réalisation d'électrodes par cette technique est décrit dans l'article « Préparation of Li4Ti5O12 and LiCoO2 thin film electrodes from precursors obtained by sol-gel », Y.H. Rho, K. Kanamura, Solid State lonics 151 (2002) 151-157. En revanche, la technique sol-gel n'est pas adaptée au dépôt de couches contenant des matériaux de cathode ou des matériaux d'anode sur des substrats métalliques à bas point de fusion, par exemple en aluminium, notamment lorsque ces dépôts nécessitent des traitements thermiques à une température supérieure à 600°C.
- Il est possible également d'obtenir des couches denses d'électrode et/ou d'électrolyte par la réalisation d'une suspension de nanoparticules de matériaux d'électrode et/ou d'électrolyte. Il existe plusieurs techniques permettant de déposer des nanoparticules sur une surface à revêtir. Parmi ces techniques, on peut citer notamment les techniques d'encrage, de trempage-retrait (dip-coating), trempage-tournette (spin-coating), procédé Langmuir-Blodgett. Les nanoparticules de matériaux à déposer sont au préalable mises en suspension dans un solvant qui sera évaporé par la suite. Afin d'obtenir des couches denses d'électrode et/ou d'électrolyte, il est alors nécessaire de déposer, sécher et consolider les dépôts couche par couche. Pour qu'un tel procédé puisse fonctionner, il est nécessaire que le dépôt des nanoparticules soit suffisamment compact pour qu'elles puissent se lier entre elles lors de l'étape de séchage (et/ou du traitement thermique de consolidation si nécessaire). Une fois les nanoparticules déposées sous forme de couches puis séchées, un traitement thermique et/ou mécanique est effectué pour assembler les nanoparticules entre elles. Lorsque le dépôt des nanoparticules est réalisé sur un substrat métallique, on applique avantageusement une pression uniaxiale (avec ou sans chauffage) sur le dépôt afin d'éviter un retreint latéral lors de l'étape de consolidation. Par ailleurs, cette technique permet de réaliser des dépôts composites contenant des matériaux actifs, des matériaux conducteurs d'ions lithium et/ou des matériaux conducteurs électroniques afin d'accroitre l'épaisseur des couches d'électrodes sans altérer leur propriétés de conduction (ionique et/ou électronique).
- La technique de dépôt électrophorétique permet aussi d'obtenir des couches denses de matériaux d'électrodes et/ou d'électrolyte. Lorsque la taille des particules à déposer est inférieure à 100 nm, de préférence inférieure à 50 nm, et encore plus préférentiellement inférieure à 30 nm, il est possible d'obtenir des couches denses par électrophorèse directement sur les substrats conducteurs métalliques, avec une densité supérieure à 50% de la densité théorique du corps massif. Afin d'éviter la fissuration des couches après dépôt, les nanoparticules mises en suspensions doivent être de faibles dimensions et parfaitement stables. En fonction des propriétés des nanoparticules déposées, de la compacité, de l'épaisseur des couches, un traitement thermique et/ou mécanique supplémentaire peut être effectué pour densifier les dépôts desdites couches. Cela peut conduire à des densités supérieures à 85% voire supérieure à 90% de la densité théorique du corps massif.

Lorsque les suspensions de particules sont moins stables, le dépôt par électrophorèse peut être avantageusement réalisé par étapes successives. En effet, selon l'épaisseur de la couche déposée, le risque d'apparition de fissures lors de l'étape de séchage est important. Ainsi, il est possible de réaliser des dépôts d'épaisseur supérieure à 0,5 µm sans fissures, par dépôt et consolidation de couches successives. Par exemple, une couche dense épaisse peut être obtenue par réalisation des étapes suivantes :
a) on dépose par électrophorèse un mélange de particules de matériaux d'anode ou de cathode, de matériaux conducteurs des électrons et de matériaux conducteurs des ions lithium sur 0,4 µm d'épaisseur (suffisamment fine pour ne pas donner lieu à l'apparition de fissures) ;
b) on sèche le dépôt par chauffage, par lyophilisation ou par immersion du dépôt dans du CO₂ à l'état supercritique ;
c) optionnellement, on réalise une compression mécanique uniaxiale du dépôt, de préférence avec chauffage ;
d) on réalise à nouveau les étapes a), b) et c) jusqu'à obtenir une couche d'épaisseur souhaitée.

Cette technique présente l'avantage d'obtenir des couches denses de fortes épaisseurs. Par ailleurs, cette technique permet de réaliser des dépôts composites contenant à la fois des matériaux actifs, des matériaux conducteurs ioniques et/ou électroniques, ce qui permet de conserver de bonnes propriétés de conduction des électrodes, même lorsque ces dernières sont de fortes épaisseurs. De plus, cette technique peut être mise en oeuvre directement sur des substrats conducteurs métalliques et permet de réaliser des couches denses d'anode, de cathode et/ou d'électrolyte. En outre, en fonction de la taille des particules des matériaux déposés, le traitement thermique et la compression mécanique peuvent être variables. Pour le dépôt par électrophorèse d'une suspension de nanoparticules de taille inférieure à 100 nm, de préférence inférieure à 50 nm, et encore plus préférentiellement inférieure à 30 nm, les couches obtenues peuvent être denses directement après dépôt, notamment lorsque les matériaux déposés sont peu réfractaires et possèdent une énergie de surface élevée. En revanche, pour des particules de taille supérieure à 100 nm, l'application d'une compression mécanique uni-axiale et/ou d'un traitement thermique peut être réalisée pour densifier la couche. Cette technique permet alors de réaliser rapidement des dépôts relativement épais, et donc particulièrement bien adapté à la réalisation d'électrodes épaisses pour des batteries de fortes densités d'énergie.

Le substrat peut être une feuille ou une bande présentant une surface conductrice ou des éléments conducteurs, par exemple des zones conductrices. La nature du substrat au contact des électrodes doit être inerte et ne doit pas interférer et donner lieu à des réactions parasites dans le domaine de potentiel de fonctionnement de la batterie Li-ion. A titre d'exemple, un feuillard de cuivre, d'aluminium ou de nickel, d'une épaisseur qui peut être par exemple de 6 µm, peut être utilisé, ou une bande polymère présentant un dépôt de surface électriquement conducteur (appelé aussi ici film polymère métallisé).

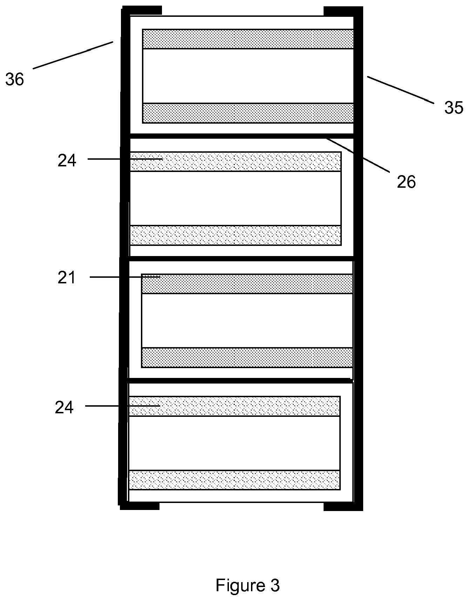

Dans le cadre de la présente invention, le substrat doit être de fine épaisseur afin que l'on puisse réaliser des découpes fines des électrodes, telles que mieux illustrée sur les figures 3 et 10. Les films métalliques et/ou polymères métallisés sont préférés. Le motif des feuilles d'électrode peut être réalisé avant le dépôt des électrodes. Ce motif peut être réalisé par tout procédé connu à cette fin, i.e. par tout procédé mécanique, chimique ou électrochimique.

L'avantage du procédé selon l'invention est qu'il permet de réaliser des structures « tout solide » (ou « entièrement solide ») à faible température. Ainsi, des substrats à base de films polymères métallisés peuvent être avantageusement utilisés. De tels films peuvent être fabriqués industriellement avec des épaisseurs de l'ordre de 1µm, ce qui permet d'augmenter la densité d'énergie volumique des batteries en couches mince.

Avantageusement, pour améliorer la qualité des contacts électriques et éviter l'apparition de réactions parasites avec les matériaux d'électrode, les surfaces de collecteurs de courant revêtues sont revêtues par des métaux nobles ou des métaux de transition par métallisation. Préférentiellement, les métaux pouvant être déposés à la surface des collecteurs de courant sont sélectionnés parmi les métaux suivant : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux. Alternativement, des films d'oxydes conducteurs comme l'oxyde d'indium-étain (ITO) peuvent être utilisés comme revêtement sur le substrat afin d'améliorer les qualités de contact entre le substrat et les électrodes.

De préférence, ces revêtements doivent rester minces et leur épaisseur ne doit pas être supérieure à 500 nm, et de préférence les épaisseurs des couches de métallisation de surface seront de l'ordre de 100 nm. Ces couches de métallisation peuvent être réalisées sur des films, des feuillards métalliques de fine épaisseur, par exemple en aluminium ou en cuivre ou en nickel. De préférence, l'épaisseur de ces feuillards est inférieure à 20 µm, plus préférentiellement inférieure à 10 µm, et encore plus préférentiellement inférieur ou égal à 5 µm.

Les films polymères métallisés doivent être également de fines épaisseurs, de préférence inférieures à 5 µm, et plus préférentiellement de l'ordre de 1 µm. La nature des couches de métallisation est décrite précédemment, et les films peuvent être soit en polynaphtalate d'éthylène (PEN), polytéréphtalate d'éthylène (PET), polypropylène (PP), ou en Téflon® (PTFE), polyimide (PI), et plus spécifiquement en Kapton® pour les procédés nécessitant des traitements thermiques de 300°C.

De préférence, la rugosité des substrats n'excède pas 10% de l'épaisseur de l'électrode déposée afin d'assurer un contact optimal entre les éléments de batteries et garantir une homogénéité des propriétés d'électrodes.

Le substrat peut être préparé par exemple de la manière suivante : on approvisionne un feuillard d'aluminium d'une épaisseur comprise entre 5 et 20 µm, et de préférence de l'ordre de 15 µm. Le feuillard est ensuite positionné de manière à être maintenu « à plat ». La surface du feuillard d'aluminium est de préférence nettoyée, par exemple par immersion dans un bain de nettoyage. Ce nettoyage peut être par exemple réalisé par des immersions dans un bain de lessive de chez NGL technologie sous ultrasons, suivi d'un rinçage à l'eau distillée. Avantageusement, le feuillard est traité par électro-polissage afin de réduire son épaisseur, et/ou de supprimer les rugosités et microrugosités de surface. Ce traitement d'électro-polissage peut être réalisé dans une solution ayant la composition chimique suivante: 80% d'éthanol absolu, 13,8% d'eau distillée, 6,2% d'acide perchlorique à 70%. La tension appliquée est de l'ordre de 15V. Si nécessaire, le bain de traitement peut être refroidi pour éviter les échauffements liés aux fortes densités de courant.

Pour une meilleure qualité de surface, d'autres formulations de bains peuvent être utilisées, comme par exemple, des bains à base de solutions de type EPS 1250 ou EPS 1300 de chez EP-Systems.

Après le traitement d'électro-polissage, la surface est rincée à l'eau distillée. L'épaisseur du feuillard à l'issue de ce traitement est généralement comprise entre 1 et 10 µm.

Dans un autre mode de réalisation, la réduction de l'épaisseur du feuillard et/ou la suppression des rugosités et microrugosités de surface du feuillard sont réalisées par dépôt électrochimique de films métalliques, et plus particulièrement des films métalliques d'aluminium, de nickel ou de cuivre.

Ce feuillard est avantageusement utilisé comme substrat d'anode et comme substrat de cathode dans le procédé selon l'invention.

Avantageusement, un traitement de nickelage peut être réalisé directement sur la surface du feuillard en aluminium juste après son traitement d'électro-polissage. Ce traitement peut être réalisé de différentes manières, soit par dépôt électrochimique, soit par immersion dans une solution contenant des sels de nickel, soit les deux successivement. A titre d'exemple, le dépôt électrolytique peut être réalisé dans un bain de composition suivante: sulfamate de nickel à 300 g/l, H₃BO₃ à 30 g/l, NiCl₂ à 30 g/l. Le nickelage est réalisé sur le feuillard en aluminium, dont la surface a été préalablement activée par électro-polissage sous une densité de courant de l'ordre de 2 A/dm², en utilisant une contre électrode en nickel. Ce traitement de nickelage permet d'éviter la formation d'une couche d'oxyde à la surface de l'aluminium, et d'améliorer la qualité des contacts électriques, et l'adhérence des dépôts.

Le traitement cité précédemment peut être réalisé à partir d'autres métaux susceptibles d'être déposés sur la surface du feuillard en aluminium, tel que décrit ci-avant, i.e. l'or, le platine, le palladium, le vanadium, le cobalt, le manganèse, le niobium, le tantale, le chrome, le molybdène, le titane, le palladium, le zirconium, le tungstène, le nickel ou tout alliage comprenant au moins un de ces métaux. Le dépôt peut être réalisé par des techniques bien connues de l'homme du métier, et plus particulièrement par dépôt chimique en phase vapeur, ou par voie physique, notamment par évaporation et/ou par dépôt physique en phase vapeur.

### 2.3 Dépôt d'une couche de matériau de liaison Ms

Les inventeurs ont constaté que l'assemblage des couches entre elles peut s'avérer difficile et il est alors nécessaire d'apporter (par voie thermique et/ou mécanique) une grande quantité d'énergie pour les lier. Or, l'utilisation de températures élevées pour assembler les couches est très désavantageuse car les couches peuvent s'oxyder, des problèmes d'inter-diffusion dans les couches peuvent se créer et les collecteurs peuvent être fortement détériorés.

Selon un aspect essentiel de la présente invention, afin de faciliter l'empilement des couches, on réalise, avant ladite étape d'empilement, un dépôt d'une couche de matériau de liaison Ms soit :
o directement sur la face de la couche d'anode ou de cathode obtenue à l'étape a) du procédé selon l'invention ; ou
∘ sur la face de la couche d'anode et/ou de cathode revêtues d'une couche d'électrolyte obtenues à l'étape b) du procédé selon l'invention ; ou
∘ sur la face de la couche d'anode revêtue d'une couche d'électrolyte (obtenue à l'étape b)) et sur la face de la couche de cathode (obtenue à l'étape a)) ; ou sur la face de la couche d'anode (obtenue à l'étape a)) et sur la face de la couche de cathode revêtue d'une couche d'électrolyte (obtenue à l'étape b)).

La couche de matériau de liaison Ms doit être, comme l'électrolyte, un bon conducteur d'ions lithium.

Le point de fusion de la couche de matériau de liaison telle que déposée doit être inférieur à celui des couches avec lequel il est en contact. Cela peut résulter du choix du matériau Ms, mais aussi de la forme sous laquelle il se présente dans la couche. En particulier, on sait que le point de fusion d'un matériau présent sous la forme de nanoparticules est plus faible que le point de fusion du matériau dense, ce qui est lié à la forte énergie surfacique des nanoparticules.

Dans un mode de réalisation avantageux, le matériau de liaison Ms est déposé sous la forme d'une couche composée de nanoparticules et/ou sous la forme d'une couche très mince (par exemple d'une épaisseur inférieure à 50 nm ou 20 nm) afin de diminuer la température de traitement thermique réalisé à l'étape e). Il est alors possible d'empiler face sur face deux couches denses par la réalisation d'un dépôt d'une couche de matériau de liaison Ms sur au moins une desdites deux couches denses, la température du traitement thermique T_{R} de l'étape e) permettant de lier lesdites deux couches denses, s'il est effectué, étant inférieure à la température de fusion du ou des matériaux constitutifs des couches denses.

Dans un mode de réalisation, qui illustre la possibilité du procédé selon l'invention de réaliser un empilement mécanique de deux matériaux identiques, on dépose en tant que matériau de liaison Ms une mince couche de particules nanométriques de matériau d'électrolyte sur une couche densifiée d'électrolyte, puis on empile (typiquement par voie mécanique) sur cette mince couche de matériau de liaison une seconde couche densifiée d'électrolyte, et on soumet l'ensemble à un traitement thermique et/ou mécanique de densification, au cours duquel le matériau de liaison va assurer la liaison entre les deux couches d'électrolyte. Cette liaison se crée probablement par un mécanisme de diffusion ou de migration de matériau de liaison, plus fusible, en direction des couches, moins fusibles mais chimiquement identiques, avec lesquelles il est en contact.

D'une manière générale, pour assembler par empilement lesdites couches obtenues par le procédé selon l'invention, le matériau de liaison Ms est choisi parmi un ou plusieurs des matériaux suivants :
a) les matériaux à base d'oxydes choisis parmi Li_{3,6}Ge_{0,6}V_{0,4}O₄ ; Li₂O-Nb₂O₅ ; LiSiO₄ ; Li₂O ; Liᵢ₄Zn(GeO₄)₄ ; Li₆Zr₂O₇ ; Li₈Zr0₆ ; Li_{0,35}La_{0,55}TiO₃ ; Li_{0,5}La_{0,5}TiO₃; Li₇La₃Zr₂O₁₂ ; Li₅₊ₓLa₃(Zrₓ,A₂₋ₓ)O₁₂ avec A=Sc, Ti, V, Y, Nb, Hf, Ta, Al, Si, Ga, Ge, Sn et 1,4 ≤ x ≤ 2 ;
b) les matériaux à base de nitrures ou d'oxynitrures choisis parmi Li₃N; Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium et de phosphore (appelés LiPON) pouvant également contenir du silicium (appelés LiSiPON), du bore (appelés LiPONB), du soufre (appelés LiPONS), du zirconium, ou de l'aluminium (appelés LiPAON) ou une combinaison d'aluminium, bore, soufre et/ou silicium ; les matériaux à base d'oxynitrures de lithium et de bore (appelés LiBON) pouvant également contenir du silicium (appelés LiSiBON), du soufre (appelés LiBONS) ou de l'aluminium (appelés LiBAON) ou une combinaison d'aluminium, soufre et silicium ; et plus particulièrement les matériaux du type LiₓPO_{y}N_{z} avec x ∼2,8 et 2y = 3z avec 0,16 ≤ z ≤ 0,46 ; ou Li_{w}POₓN_{y}S_{z} avec (2x+3y+2z) = (5+w) et 3,2 ≤ x ≤ 3,8 ; 0,13 ≤ y ≤ 0,4 ; 0 ≤ z ≤ 0,2 ; 2,9 ≤ w ≤ 3,3 ; ou LiₜPₓAl_{y}OᵤNᵥS_{w} avec (5x+3y) =5 ; (2u+3v+2w) = (5+t) ; 2,9≤ t ≤3,3 ; 0,84≤ x ≤0,94 ; 0,094≤ y ≤0,26 ; 3,2≤ u ≤3,8 ; 0,13≤ v ≤0,46 ; 0≤ w ≤0,2 ; ou Li_{1,9}Si_{0,2}P_{1,0}O_{1,1}N_{1,0} ; ou Li_{2,9}PO_{3,3}N_{0,46} ; ou Li_{6-0,75x}P_{1,75x}Zr₂₋₂ₓO_{7-y}N_{z} avec z ≤ 14/3 ; 2y = 3z et x ≤ 0,8 ; ou Li_{8-3,5x}P_{1,5x}Zr₁₋ₓO_{6-y}N_{z} avec x ≤ 0,8 ; z ≤ 4 et 2y = 3z ; ou Li₈₋₃ₓLaₓZrO_{6-y}N_{z} avec 0 < x ≤ 2 ; z ≤ 4 et 2y = 3z ; ou Li₃(Sc₂₋ₓMₓ)(PO_{4-y}N_{z}) avec x ≤ 2 ; z ≤ 8/3 ; 2y = 3z et M=Al, Y ou Al₁₋ₐYₐ avec a<1 ;
c) les matériaux à base de sulfure choisis parmi LiₓM_{1-y}M'_{y}S₄ avec M=Si, Ge, Sn et M'=P, Al, Zn, Ga, Sb ; Li₂S ; B₂S₃ ; P₂S₅ ; 70Li₂S-30P₂S₅ ; Li₇P₃S₁₁ ; Li₁₀GeP₂S₁₂ ; Li₇PS₆ ; Li_{3,25}Ge_{0,25}P_{0,75}S₄ ; Li₁₀MP₂S₁₂ avec M = Si, Ge, Sn et les mélanges entre Li₂S et un des composés parmi P₂S₅, GeS₂, Ga₂S₃ ou SiS₂ ;
d) les matériaux à base de phosphate ou de borate choisis parmi Li₃PO₄ ; LiTi(PO₄)₃ ; Li₁₊ₓAlₓM₂₋ₓ(PO₄)₃ (où M = Ge, Ti, et/ou Hf et où 0 < x < 1) ; Li_{1,3}Al_{0,3}Ti_{1,7}(PO₄)₃ ; Li_{1+x+y}AlₓTi₂₋ₓSi_{y}P_{3-y}O₁₂ (où 0 ≤ x ≤ 1 et 0 ≤ y ≤ 1); Li_{1+x+z}Mx(Ge_{1-y}Ti_{y})₂₋ₓSi_{z}P_{3-z}O₁₂ (où 0 ≤ x ≤ 0,8, 0 ≤ y ≤ 1,0, 0 ≤ z ≤ 0,6) ; 2(Li_{1,4}Ti₂Si_{0,4}P_{2,6}O₁₂)-AlPO₄ ; LiₓAl_{z-y}Ga_{y}S_{w}(PO₄)_{c} ou LiₓAl_{z-y}Ga_{y}S_{w}(BO₃)_{c} ou 2(Li_{1,4}Ti₂Si_{0,4}P_{2,6}O₁₂)-AlPO₄ ; LiₓAl_{z-y}Ga_{y}S_{w}(PO₄)_{c} ou LiₓAl_{z-y}Ga_{y}S_{w}(BO₃)_{c} ou LiₓGe_{z-y}Si_{y}S_{w}(PO₄)_{c} ou LiₓGe_{z-y}Si_{y}S_{w}(BO₃)_{c} ou d'une manière plus générale LiₓM_{z-y}M'_{y}S_{w}(PO₄)_{c} ou LiₓM_{z-y}M'_{y}S_{w}(BO₃)_{c} avec 4 < w < 20, 3 < x <10, 0 ≤ y ≤ 1, 1 ≤ z ≤ 4 et 0 < c < 20 et M ou M' un élément parmi Al, Si, Ge, Ga, P, Zn, Sb ; ou Li₃Sc₂₋ₓMₓPO₄ avec M = Al, Y ou Al₁₋ₐYₐ avec a<1 ;
e) les matériaux mixtes choisis parmi les mélanges entre Li₂S et un des composés parmi Li₃PO₄, Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les mélanges entre soit Li₂S et/ou B₂S₃, SiS₂, P₂S₅, GeS₂, Ga₂S₃ et un composé du type LiₐMO_{b} qui peut être soit un silicate de lithium Li₄SiO₄, un borate de lithium Li₃BO₃ ou un phosphate de lithium Li₃PO₄.

Dans une variante de réalisation, le matériau de liaison Ms comporte/est constitué d'au moins un polymère, éventuellement imprégné d'un sel de lithium, le polymère étant de préférence choisi dans le groupe formé par le polyéthylène oxyde, les polyimides, le polyfluorure de vinylidène, le polyacrylonitrile, le polyméthacrylate de méthyle, les polysiloxanes. Le sel de lithium étant de préférence choisi parmi LiCI, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

Le dépôt de la couche de matériau de liaison Ms peut être réalisé par l'une des techniques suivantes, étant entendu que les dépôts des couches de l'étape a) et b) du procédé selon l'invention ne sont pas tous réalisés par électrophorèse :
i) dépôt physique par phase vapeur (PVD), et plus particulièrement par évaporation sous vide, par ablation laser, par faisceau d'ions, par pulvérisation cathodique ;
ii) dépôt chimique par phase vapeur (CVD), et plus particulièrement assisté par plasma (PECVD), assisté par laser (LACVD), ou assisté par aérosol (AA-CVD) ;
iii) électropulvérisation ;
iv) aérosol deposition;
v) électrophorèse ;
vi) sol-gel ;
vii) trempage, plus particulièrement par trempage-retrait (dip-coating), trempage-tournette (spin-coating), ou procédé Langmuir-Blodgett.

Pour garantir de bonnes performances des électrodes, ces dépôts doivent être de faible épaisseur, de préférence inférieure à 200 nm, et encore plus préférentiellement inférieure à 100 nm afin de ne pas induire de trop grands effets résistifs dans la cellule de la batterie.

Les techniques de dépôt sol-gel permettent de réaliser un dépôt compact de matériau de liaison « Ms ». Cette technique est bien adaptée à la réalisation de couches dont l'épaisseur est inférieure à 200 nm.

Il est également possible de déposer une couche de matériau de liaison Ms en utilisant une suspension comprenant préalablement des nanoparticules de matériau de liaison Ms dans un liquide approprié qui sera par la suite évaporé. Il s'agit plus particulièrement des techniques d'encrage, de trempe, de spin-coating ou procédé Langmuir-Blodgett.

Les techniques de dépôt par électropulvérisation peuvent également être utilisées pour réaliser des dépôts de matériau de liaison Ms sous forme de nanoparticules. Ce dépôt est réalisé par pulvérisation de composés chimiques réagissant sous l'influence d'un champ électrique pour former en surface une couche de matériau de liaison Ms après séchage (cf. point 2.2 de la présente description).

Dans un autre mode de réalisation, le dépôt de nanoparticules de matériau de liaison Ms peut être effectué par la technique de dépôt de type « aérosol ». Les nanoparticules de matériau Ms contenues dans un réservoir sont mises en mouvement par l'injection d'un gaz sous pression dans le conteneur. Un dispositif de désagglomération peut être installé sur le jet de particules afin de briser les agglomérats et assurer un flux de particules de tailles contrôlées (cf. point 2.2 de la présente description).

Enfin, la technique de dépôt par électrophorèse permet d'obtenir une couche de matériau de liaison Ms de faible épaisseur.

Après le dépôt de la couche de matériau Ms sur la face d'au moins une des couches obtenues à l'étape a) et/ou b) du procédé selon l'invention, lesdites couches sont empilées face sur face puis compressées mécaniquement et/ou traitées thermiquement pour obtenir un assemblage entièrement solide de cellules élémentaires pouvant fonctionner comme une batterie. De préférence, le traitement thermique des couches à assembler est réalisé à une température T_{R} qui, de préférence, ne dépasse pas 0,7 fois la température de fusion ou de décomposition (exprimée en °C), et plus préférentiellement ne dépasse pas 0,5 fois (et encore plus préférentiellement ne dépasse pas 0,3 fois) la température de fusion ou de décomposition (exprimée en °C) du matériau de liaison Ms.

Le traitement thermique a lieu à une température (T_{R}) relativement basse, qui dépend du point de fusion du matériau, de la taille des nanoparticules et de l'intensité de la compression mécanique. T_{R} ne dépasse avantageusement pas 600°C, et de préférence ne dépasse pas 500°C ou même 400°C. Le traitement thermique est avantageusement réalisé sous vide, afin de minimiser la pollution de la surface des particules déposées, ou encore sous gaz inerte.

Avantageusement, la compression mécanique des couches à assembler est réalisée à une pression comprise entre 10 et 100 MPa, de préférence entre 10 et 50 MPa.

L'épaisseur totale de la couche de matériau de liaison Ms dépend aussi de la nature des couches à assembler. Par exemple, lorsqu'on souhaite assembler une couche de cathode et une couche d'anode revêtue chacune d'une couche d'électrolyte solide, l'épaisseur de la couche de matériau de liaison Ms doit être très faible, i.e. inférieure à 100 nm, de préférence inférieure à 50 nm et encore plus préférentiellement inférieure à 30 nm, pour que l'électrolyte obtenue reste bon conducteur ionique. Enfin, lorsqu'on souhaite assembler une couche d'anode (respectivement de cathode) non revêtue d'une couche d'électrolyte et une couche de cathode (respectivement d'anode) revêtue d'une couche d'électrolyte, l'épaisseur de la couche de matériau de liaison Ms est inférieure à 100 nm, de préférence inférieure à 50 nm et encore plus préférentiellement inférieure à 30 nm. Avantageusement, la taille des particules de matériau Ms est inférieure à l'épaisseur de la couche sur laquelle on dépose le matériau Ms.

Nous indiquons ici quelques modes de réalisation avantageux pour sélectionner et déposer le matériau de liaison Ms. Le matériau de liaison peut être inorganique, et dans ce cas il est avantageusement déposé à partir de nanoparticules, lequel film déposé à partir de nanoparticules est avantageusement soumis à un procédé de densification thermique et/ou mécanique ; le fait qu'il soit déposé sous la forme de nanoparticules diminue son point de fusion par rapport à une phase massive. Le matériau de liaison peut comporter un polymère pré-imprégné d'ions de lithium, et dans ce cas, le point de fusion de cette phase polymère sera plus bas que le point de fusion des phases inorganiques avec lesquels ledit polymère est en contact. Et enfin, certains phosphates et borates présentent un pont de fusion assez bas et n'ont pas besoin d'être déposés sous la forme de nanoparticules pour être fusibles et pour favoriser le contact entre les deux couches empilées face sur face.

### 2.4 Assemblage d'une batterie

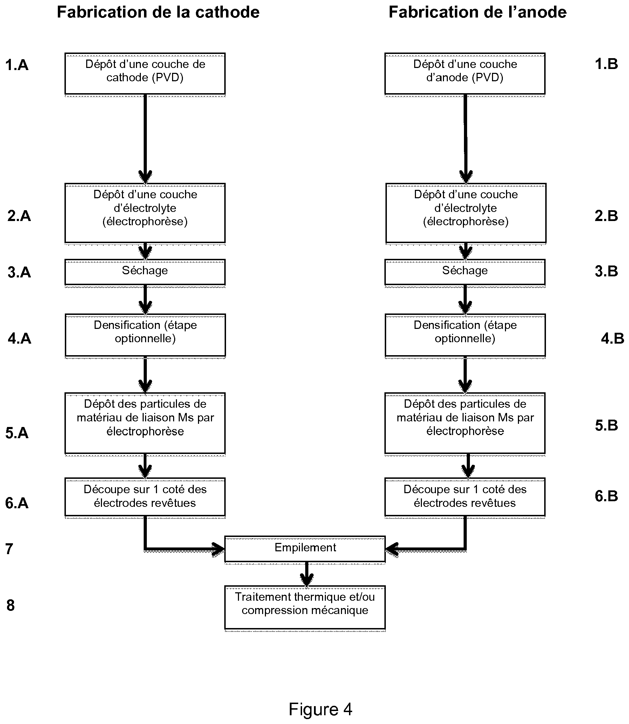

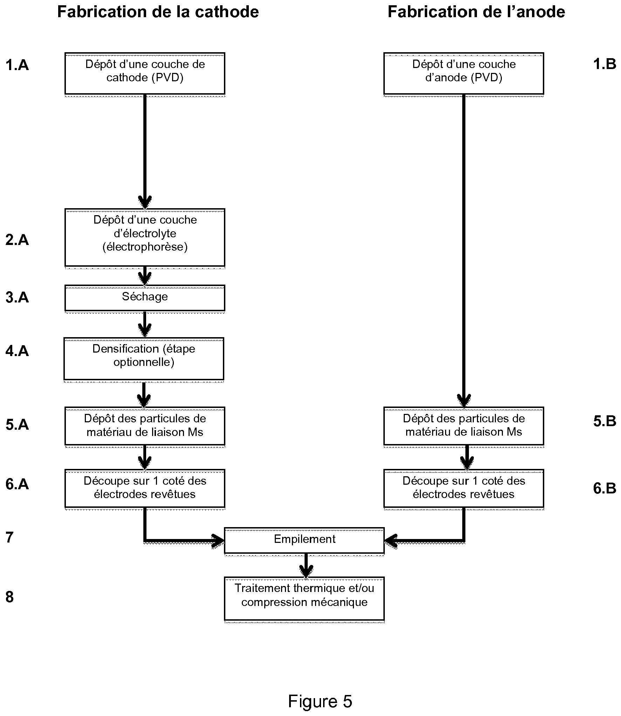

Les figures 4 et 5 montrent de manière schématique les étapes de fabrication d'une batterie selon différents modes de réalisation du procédé selon l'invention. Ces modes de réalisation ne sont nullement limitatifs mais sont donnés à titre d'illustration.

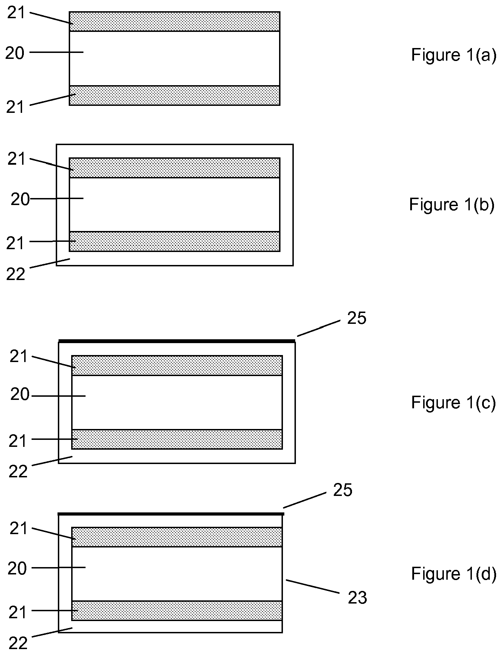

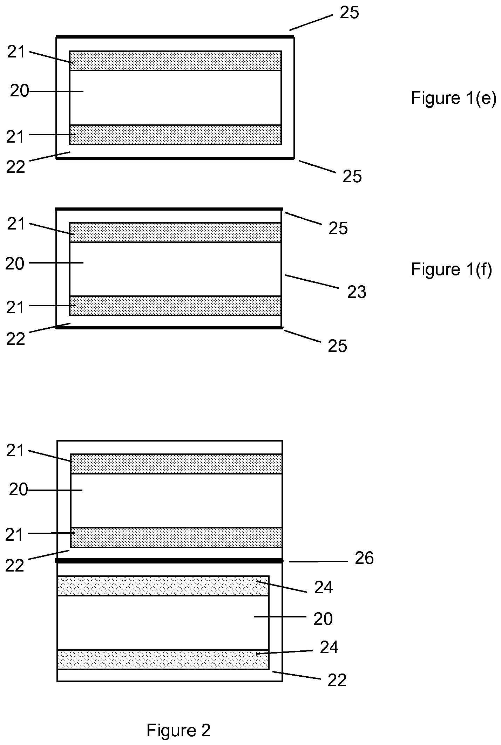

Le produit obtenu à chaque étape est montré de manière schématique sur les figures 1a à 1d selon le mode de réalisation de l'invention illustré schématiquement en figure 4. Aux étapes 1.A et 1.B (figures 4 et 5) on dépose par dépôt physique en phase vapeur (PVD) une couche de cathode **24** et d'anode **21,** respectivement, sur le substrat conducteur **20.** Comme montré sur la figure 1a pour l'anode **21,** ce dépôt peut être effectué sur les deux faces du substrat conducteur **20.**

Aux étapes 2.A et 2.B, on dépose sur l'anode **21** et sur la cathode **24,** respectivement, une couche d'électrolyte **22** (figure 4). Son épaisseur est de préférence inférieure à 1 µm. Ce dépôt recouvre également les bords (i.e. les tranches) des électrodes, comme montré de manière schématique sur la figure 1b. Cette isolation des bords des électrodes évite à la fois le risque de court-circuit et le risque de courants de fuite. Aux étapes 3.A et 3.B on sèche ce dépôt d'électrolyte.

Dans un mode de réalisation particulier selon l'invention, on densifie le dépôt aux étapes 4.A et 4.B par un moyen mécanique et/ou thermique. Cette étape n'est pas nécessaire lorsque la couche d'électrolyte obtenue est dense et compacte après l'étape de séchage.

Dans un autre mode de réalisation, tel que représenté en figure 5, on dépose la couche d'électrolyte **22** uniquement sur la cathode **24.** Son épaisseur est de préférence inférieure à 1 µm. Ce dépôt recouvre également les bords (i.e. les tranches) des électrodes, comme montré de manière schématique sur la figure 1b. Cette isolation des bords des électrodes évite à la fois le risque de court-circuit et le risque de courants de fuite. Elle permet également de simplifier l'encapsulation. Certaines céramiques et/ou vitrocéramiques conductrices des ions lithium peuvent également protéger la cellule de l'environnement externe. Une seule couche d'encapsulation sous forme de polymère ou de silicone peut alors être utilisée pour protéger la cellule batterie. A l'étape 3.A on sèche ce dépôt d'électrolyte.
Aux étapes 5.A et 5.B (figures 4 et 5) on dépose une couche de matériau de liaison Ms sur la face d'au moins une des deux couches obtenues par dépôt électrophorétique et qui seront empilées face surface.

Aux étapes 6.A et 6.B, on découpe un bord des électrodes comme le montre la figure 1d ou 1f. De manière avantageuse, on découpe le bord lié à la bande, afin de laisser trois arêtes revêtues d'électrolyte sur la tranche. Cet électrolyte étant un diélectrique, il permettra lors de la prochaine étape d'empilement de ne faire apparaître que les contacts anodiques d'un côté de la cellule, respectivement cathodiques sur l'autre, afin de réaliser des assemblages en parallèle des éléments de batterie afin de constituer une cellule batterie de plus forte capacité. La figure 1d ou 1f montre schématiquement une telle section de cellule après découpe : le substrat **20** a été revêtu (ici sur les deux faces) d'une couche de cathode **21** et coupé sur une tranche **23.** A l'étape 7, on réalise l'empilement de manière à ce que sur deux côtés opposés de l'empilement on trouve alternativement une succession de bords **23** d'anode **21** découpée et de bords de cathode **21,** éventuellement revêtu d'électrolyte **22,** et éventuellement revêtu de la couche de matériau de liaison Ms **25.** La figure 2 montre un empilement de deux substrats **20,** l'un d'entre eux portant sur les deux faces une couche d'anode **21** revêtue d'une couche d'électrolyte **22,** et d'une couche de matériau de liaison Ms **25** sur une seule face de la couche d'électrolyte **22,** l'autre une couche de cathode **24** revêtue d'une couche d'électrolyte **22** et d'une couche de matériau de liaison Ms **25** sur les deux faces de la couche d'électrolyte **22,** les deux faces de la couche d'électrolyte **22** déposée respectivement sur l'anode **21** et la cathode **24** et revêtues chacune d'une couche de matériau de liaison Ms **25** étant posée l'une sur l'autre pour former une interface commune **26.** Ainsi, la continuité électrique entre deux cellules voisines est assurée par l'électrolyte.

A l'étape 8, on réalise un traitement thermique et/ou une compression mécanique favorisant le contact entre les deux couches empilées face sur face pour un assemblage entièrement solide de cellules élémentaires pouvant fonctionner comme une batterie. Une fois l'empilement réalisé, des terminaisons (contacts électriques) **35,36** sont ajoutées au niveau où les collecteurs de courant cathodiques, respectivement anodiques sont apparents (non revêtus d'électrolyte isolant). Ces zones de contact peuvent être sur les côtés opposés de l'empilement pour collecter le courant ainsi que cela est représenté sur la figure 3, mais également sur les mêmes côtés ou sur des côtés adjacents.

Dans un mode de réalisation particulier, l'empilement illustré sur la figure 3 est réalisé par enroulement de deux demi-électrodes entre elles sur un mandrin afin d'obtenir une cellule de forme cylindrique. Comme pour la configuration de la figure 3, les connexions anodiques sortent alors d'un côté, alors que les connexions cathodiques sortent de l'autre côté.

Dans un mode de réalisation particulier, il est avantageux, de préférence après l'empilement et avant l'ajout des terminaisons, d'encapsuler l'empilement en déposant une couche de céramique ou en vitrocéramique pour assurer la protection de la cellule de la batterie vis-à-vis de l'atmosphère. Ces couches d'encapsulation doivent être stables chimiquement, résister aux fortes températures et être imperméables à l'atmosphère (couche barrières). Ces couches peuvent être avantageusement déposées par dépôt chimique en phase vapeur (CVD), ce qui permet d'avoir un recouvrement de l'ensemble des surfaces de l'empilement accessibles. Ainsi, l'encapsulation peut ainsi réalisée directement sur les empilements, le revêtement pouvant pénétrer dans l'ensemble des cavités disponibles. Avantageusement, une seconde couche d'encapsulation peut être déposée sur la première couche d'encapsulation pour augmenter la protection des cellules batteries de leur environnement externe. Typiquement, le dépôt de cette seconde couche peut être réalisé par une imprégnation de silicone. Le choix d'un tel matériau vient du fait qu'il résiste à des températures élevées et la batterie peut ainsi être assemblée aisément par soudure sur des cartes électroniques sans apparition de transitions vitreuses.

Avantageusement, l'encapsulation de la batterie est réalisée sur quatre des six faces de l'empilement. Les couches d'encapsulation entourent la périphérie de l'empilement, le reste de la protection à l'atmosphère étant assuré par les couches obtenues par les terminaisons.

Une fois l'empilement réalisé, et après l'étape d'encapsulation de l'empilement si cette dernière est réalisée, des terminaisons (contacts électriques) **35,36** sont ajoutées au niveau où les collecteurs de courant cathodiques, respectivement anodiques sont apparents (non revêtus d'électrolyte isolant). Ces zones de contact peuvent être sur les côtés opposés de l'empilement pour collecter le courant ainsi que cela est représenté sur la figure 3, mais également sur les mêmes côtés ou sur des côtés adjacents.

Pour réaliser les terminaisons **35,36,** l'empilement, éventuellement enrobé, est découpé suivant des plans de coupe permettant d'obtenir des composants de batterie unitaires, avec la mise à nue sur chacun des plans de coupe des connexions (+) et (-) de la batterie. Les connexions peuvent ensuite être métallisées à l'aide de techniques de dépôt plasma connu de l'homme du métier. Les terminaisons **35,36** sont de préférence constituées d'une couche d'étain à l'extérieur afin de faciliter la soudabilité de la batterie, et d'une couche de nickel en dessous de la couche d'étain afin de protéger thermiquement la cellule batterie.

Ainsi, le procédé selon l'invention permet la réalisation de batteries entièrement solides, tridimensionnelles, constituées de plusieurs cellules élémentaires, ces dernières étant connectées toutes entre elles en parallèle.

Le procédé de fabrication selon l'invention comprend de nombreux avantages car :
(i) il permet de réaliser des batteries compactes, entièrement solides sans avoir recours à des températures élevées ;
(ii) les faibles températures de mises en œuvre limitent les risques d'interdiffusion ou de réactions à l'état solide au niveau des interfaces ;
(iii) le procédé permet de réaliser des batteries entièrement solides, sans risque de fissures liées au retreint des électrodes et des couches d'électrolyte lors de l'étape d'assemblage ;
(iv) le procédé selon l'invention permet de fabriquer des batteries compactes, entièrement solides par assemblage de cellules élémentaires. En effet, le procédé selon l'invention permet de réaliser des assemblages tridimensionnels de cellules de batteries entièrement solides. Cet assemblage en une seule étape de toutes les cellules permet de réaliser une batterie tout solide monobloc constituée de plusieurs cellules élémentaires connectées toutes entre elles en parallèles. Les cellules élémentaires ne sont pas indépendantes les unes des autres.

Le procédé selon l'invention permet également de s'affranchir de l'utilisation de substrats rigides, la rigidité étant conférée par l'empilement et l'assemblage tout solide de la structure. En outre, cette technologie de fabrication permet de travailler directement sur des films métallisés de très faibles épaisseurs, ce qui permet d'obtenir des cellules batteries de très fortes densités d'énergie et de puissance.

De plus, cette technologie permet de fabriquer des batteries totalement sécurisées, sans risque de court-circuit interne et dotées de faibles autodécharges.

Enfin, les batteries obtenues selon le procédé sont dotées de fortes densités d'énergie et de puissance et peuvent fonctionner dans des conditions extrêmes de températures sans que leurs propriétés physique et chimique ne soient altérées.

### 2.5 Exemples

### Exemple 1 : assemblage Ni/Li₄Ti₅O₁₂/LiPON/LiCoO₂/Ni

### a) Préparation des substrats

On approvisionne des feuillards de nickel de 20 µm d'épaisseur. Sur ces feuillards un film mince d'ITO recouvert d'un film de Pt d'environ 100 nm chacun ont été déposés afin d'éviter la diffusion du nickel dans les matériaux d'électrodes pendant les étapes de traitement thermique. Les feuillards sont placés des cadres de maintien, de manière à créer une structure rigide de maintien des substrats.

### b) Dépôt de la couche d'anode / Dépôt d'une couche d'électrolyte sur la couche d'anode

Une couche d'anode est déposée sur le substrat par méthode sol-gel. Une solution composée de PVP poly(vinylpyrrolidone), d'isopropoxyde de titane (CH₃)₂CHO)₄Ti, d'acide acétique (CH₃COOH) et d'isopropoxyde de lithium (Li(OC₃H₇) est déposée par trempé sur le substrat. La composition chimique molaire de cette solution étant de Li(OC₃H₇)/((CH₃)₂CHO)₄Ti/PVP/CH₃COOH/i-C₃H₇OH = 4:5:5:100:100. Cette première couche déposée est ensuite séchée et frittée à 700°C pendant 1 heure, puis l'étape de dépôt au trempé de la solution décrite précédemment est reproduite. Ce nouveau dépôt réalisé sur la couche de Li₄Ti₅O₁₂ obtenu après frittage, est à son tour séché puis frittée à 700°C pendant 1 heure. Les étapes sont répétées jusqu'à l'obtention d'un film dense de Li₄Ti₅O₁₂ d' 1 µm d'épaisseur.

Une fois l'électrode anodique réalisée, on dépose à l'aide de technique du vide un film de LiPON de 1 µm d'épaisseur. Ce film de LIPON est réalisé par pulvérisation sous vide d'une cible de Li₃PO₄ sous une atmosphère de d'azote.

### c) Dépôt de la couche de cathode

Une couche de cathode est déposée sur le substrat en nickel par dépôt physique. Une cible de LiCoO₂ est évaporée sous vide par pulvérisation magnétron RF avec une puissance de 300W. Avant de réaliser le dépôt la chambre de dépôt a été mise sous vide à 5.10-6 Torr. De l'argon pur est ensuite utilisé comme gaz pour le dépôt et la pression de dépôt est maintenue à 10 mTorr. Le film de LiCoO₂ ainsi déposé a ensuite été traité thermiquement dans la chambre de dépôt à une température de 650°C, pendant 15 mn à l'aide de lampes halogènes.

### d) Dépôt d'une couche de matériau de liaison Ms

Afin de faciliter la réalisation de l'assemblage des deux demi-électrodes au niveau des surfaces de cathode et d'électrolyte solide déposé sur l'anode, on dépose préalablement sur la surface de la cathode des nanoparticules de Li_{1,3}Al_{0,3}Ti_{1,7}(PO₄)₃. Ce dépôt est réalisé en immergeant la surface du film de cathode dans une suspension de nanoparticules de Li_{1,3}Al_{0,3}Ti_{1,7}(PO₄)₃ dans l'éthanol. Les tailles des particules est d'environ 15 nm. Le film de cathode est trempé dans la suspension colloïdale de Li_{1,3}Al_{0,3}Ti_{1,7}(PO₄)₃ et retirés à une vitesse de 100 mm/min. L'épaisseur déposée est alors proche de 50 nm.

### e) Assemblage des électrodes

L'assemblage entre la cathode revêtue du matériau de liaison M_{S} et l'anode revêtue d'un film d'électrolyte solide (LiPON) a été réalisé par un traitement de recuit, et avec une pression de contact entre les deux surfaces à assembler de 80MPa. La vitesse de montée en température étant de 100°C/min, jusqu'à atteindre 450°C suivi d'un maintien à cette température pendant 5 minutes avant de refroidir l'ensemble.

On obtient ainsi un assemblage solide Ni/Li₄Ti₅O₁₂/LiPON/LiCoO₂/Ni, avec le matériau de liaison Ms à l'interface entre le LiPON et la cathode LiCoO₂.

### Exemple 2 : Assemblage Ni/Li₄Ti₅O₁₂/ Li₃Sc_{1,6}Al_{0,4}(PO₄)₃/LiCoO₂/Ni

### a) Préparation des substrats

On approvisionne des feuillards de nickel de 10 µm d'épaisseur. Sur ces feuillards un film mince de palladium d'environ 100 nm chacun ont été déposés. Les feuillards sont placés des cadres de maintien, de manière à créer une structure rigide de maintien des substrats.

### b) Dépôt de la couche d'anode / Dépôt d'une couche d'électrolyte sur la couche d'anode

Une couche d'anode est déposée sur le substrat par méthode sol-gel. Une solution composée de PVP poly(vinylpyrrolidone), d'isopropoxyde de titane (CH₃)₂CHO)₄Ti, d'acide acétique (CH₃COOH) et d'isopropoxyde de lithium (Li(OC₃H₇) est déposée par trempé sur le substrat. La composition chimique molaire de cette solution étant de Li(OC₃H₇)/((CH₃)₂CHO)₄Ti/PVP/CH₃COOH/i-C₃H₇OH = 4:5:5:100:100. Cette première couche déposée est ensuite séchée et frittée à 700°C pendant 1 heure, puis l'étape de dépôt au trempé de la solution décrite précédemment est reproduite. Ce nouveau dépôt réalisé sur la couche de Li₄Ti₅O₁₂ obtenu après frittage, est à son tour séché puis frittée à 700°C pendant 1 heure. Les étapes sont répétées jusqu'à l'obtention d'un film dense de Li₄Ti₅O₁₂ d'1 µm d'épaisseur.

Une fois l'électrode anodique réalisée, on dépose à l'aide de technique du vide un film de Li₃Sc_{1,6}Al_{0,4}(PO₄)₃ de 1 µm d'épaisseur.

### c) Dépôt de la couche de cathode

Une couche de cathode est déposée sur le substrat en nickel par dépôt physique. Une cible de LiCoO₂ est évaporée sous vide par pulvérisation magnétron RF avec une puissance de 300W. Avant de réaliser le dépôt la chambre de dépôt a été mise sous vide à 5.10-6 Torr. De l'argon pur est ensuite utilisé comme gaz pour le dépôt et la pression de dépôt est maintenue à 10 mTorr. Le film de LiCoO₂ ainsi déposé a ensuite été traité thermiquement dans la chambre de dépôt à une température de 650°C, pendant 15 mn à l'aide de lampes halogènes.

### d) Dépôt d'une couche de matériau de liaison Ms

Afin de faciliter la réalisation de l'assemblage des deux demi-électrodes au niveau des surfaces de cathode et d'électrolyte solide déposé sur l'anode, on dépose préalablement sur la surface de la cathode des nanoparticules de Li₃Sc_{1,6}Al_{0,4}(PO₄)₃. Ce dépôt est réalisé en immergeant la surface du film de cathode dans une suspension de nanoparticules de Li₃Sc_{1,6}Al_{0,4}(PO₄)₃ dans l'éthanol. Les tailles des particules est d'environ 15 nm. Le film de cathode est trempé dans la suspension colloïdale de Li₃Sc_{1,6}Al_{0,4}(PO₄)₃ et retirés à une vitesse de 100 mm/min. L'épaisseur déposée est alors proche de 50 nm.

### e) Assemblage des demi-électrodes, pour réaliser des cellules multicouches :

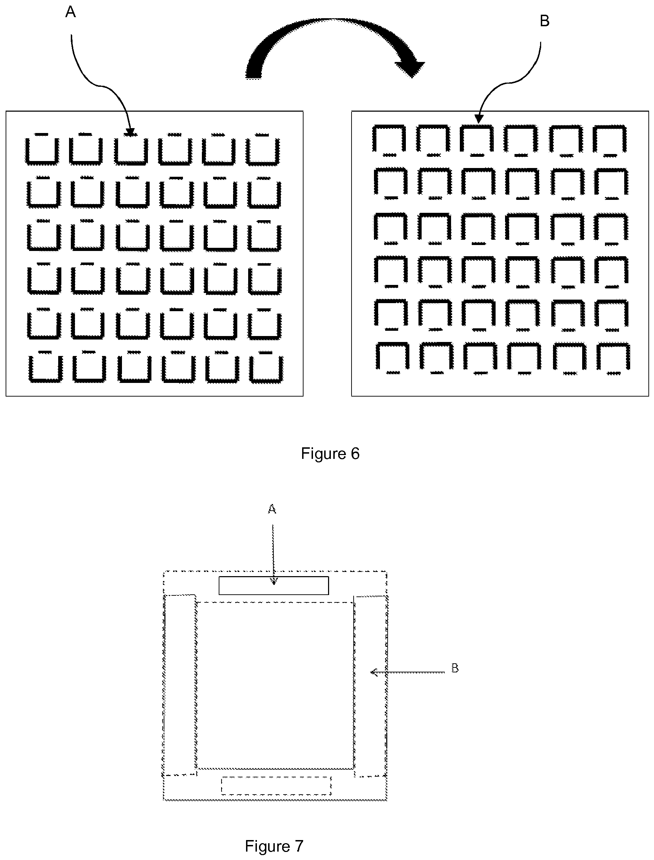

Avant d'être empilées, les anodes revêtues du film d'électrolyte solide et les cathodes ont été « poinçonnée » afin de réaliser des découpes aux dimensions de la batterie à réaliser. Ces motifs (cf. figures 6 et 7, repères B) comprennent les trois découpes qui se jouxtent et qui définissent la dimension de la batterie. Une deuxième fente (cf. figures 6 et 7, repère A) a été réalisée sur le côté non découpé afin de pouvoir assurer le passage des produits nécessaires à l'encapsulation du composant.

Le dépôt de matériau de liaison Ms pouvant être réalisé après ou avant cette étape de poinçonnage des électrodes. Les électrodes anodiques et cathodiques ont ensuite été empilées de manière alternée afin de constituer un empilement de plusieurs cellules élémentaires. Les motifs de découpes des anodes et cathodes ont été placés en configuration « tête bêche » comme illustré sur la figure 7. Cet empilement a ensuite été pressé à 50 MPa et chauffé à 350°C pendant 10 minutes afin d'obtenir une structure empilée multicouches monobloc et rigide.

Cet ensemble de feuilles empilées a ensuite été placé dans une chambre de dépôt sous vide afin de réaliser un dépôt conformai d'un matériau protecteur d'encapsulation qui va recouvrir la totalité des surfaces de cet empilement, y comprise à l'intérieur des zones découpées. Les orifices A (cf. figures 6 et 7) favorisent la pénétration du matériau déposé sur les faces internes des couches empilées. Ce matériau protecteur peut être un revêtement d'hexaméthyldisiloxane (HMDSO) déposé par dépôt chimique en phase vapeur assisté par plasma. Cette première couche de revêtement permet de protéger la cellule batterie de l'environnement extérieur et plus particulièrement de l'humidité. Une seconde couche de 15 µm de silicone est ensuite appliquée par injection afin d'enrober les cellules batteries d'une couche qui protégera les batteries d'endommagement mécaniques.

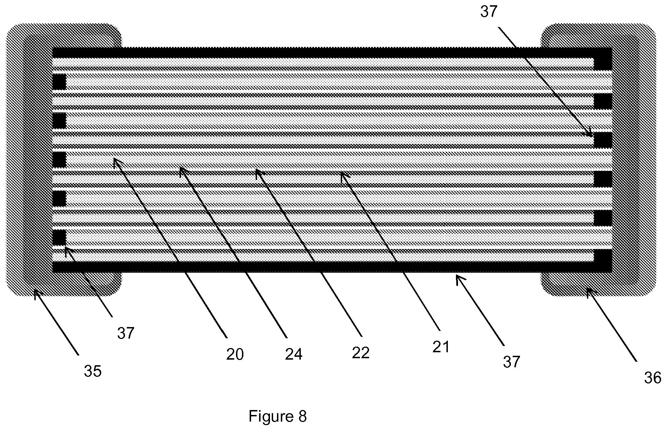

Cet ensemble d'éléments de batteries, empilées et enrobées est ensuite découpé suivant les plans de coupe permettant d'obtenir des composants de batterie unitaires, avec la mise à nue sur chacun des plans de coupe des connexions (+) et (-) de la batteries, sur des faces opposées. Ces connexions sont ensuite métallisées à l'aide de techniques de dépôt plasma afin d'obtenir le composant batterie illustré figure 8. Les terminaisons sont constituées d'une couche de nickel protégeant thermiquement la cellule batterie et une couche d'étain facilitant la soudabilitié de la batterie obtenue.

### f) Assemblage des électrodes

L'assemblage entre la cathode revêtue du matériau de liaison Ms et l'anode revêtue d'un film d'électrolyte solide de Li₃Sc_{1,6}Al_{0,4}(PO₄)₃ a été réalisé par un traitement de recuit, et avec une pression de contact entre les deux surfaces à assembler de 80MPa. La vitesse de montée en température étant de 100°C/min, jusqu'à atteindre 450°C suivi d'un maintien à cette température pendant 5 minutes avant de refroidir l'ensemble.

On obtient ainsi un assemblage solide Ni/Li₄Ti₅O₁₂/ Li₃Sc_{1,6}Al_{0,4}(PO₄)₃/LiCoO₂/Ni, avec le matériau de liaison Ms à l'interface entre le Li₃Sc_{1,6}Al_{0,4}(PO₄)₃ et la cathode LiCoO₂.

## Revendications

1. Procédé de fabrication de batteries entièrement solides, lesdites batteries comprenant au moins une couche dense contenant des matériaux d'anode, au moins une couche dense contenant des matériaux d'électrolyte solide, et au moins une couche dense contenant des matériaux de cathode pour obtenir une batterie entièrement solide constituée d'un assemblage de plusieurs cellules élémentaires, procédé comprenant les étapes suivantes :
a) on dépose une couche dense d'anode et une couche dense de cathode chacune sur son substrat conducteur, lesdits substrats conducteurs pouvant servir comme collecteur de courant anodique et cathodique respectivement ;
b) on dépose une couche dense d'électrolyte solide sur au moins une des deux couches obtenues à l'étape a) ;
c) on dépose une couche de nanoparticules d'au moins un matériau de liaison Ms, de préférence par électrophorèse, sur l'une au moins des couches denses obtenues à l'étape a) et/ou b) ; étant entendu que les dépôts des couches de l'étape a) et b) ne sont pas tous réalisés par électrophorèse ; le point de fusion de la couche de nanoparticules dudit au moins un matériau de liaison Ms étant inférieur à celui des couches avec lequel il est en contact ;
d) on empile face sur face la couche obtenue à l'étape c) avec une couche obtenue à l'étape a), b) ou c) ;
e) on effectue un traitement thermique et/ou une compression mécanique, favorisant le contact entre lesdites deux couches empilées face sur face, pour obtenir un assemblage entièrement solide de cellules élémentaires pouvant fonctionner comme une batterie.

2. Procédé selon la revendication 1, **caractérisé en ce que** le traitement thermique réalisé à l'étape e) est effectué à une température T_{R} qui, de préférence, ne dépasse pas 0,7 fois la température de fusion ou de décomposition exprimée en °C, et plus préférentiellement ne dépasse pas 0,5 fois et encore plus préférentiellement ne dépasse pas 0,3 fois la température de fusion ou de décomposition exprimée en °C du au moins un matériau de matériau de liaison Ms le plus fusible soumis à ladite étape de traitement thermique.

3. Procédé selon la revendication 1 ou 2, **caractérisé en ce que** la compression mécanique de l'assemblage obtenu à l'étape e) est réalisé à une pression comprise entre 10 et 100 MPa, de préférence entre 10 et 50 MPa.

4. Procédé selon l'une quelconque des revendications 1 à 3, **caractérisé en ce que** les dépôts des couches de l'étape a), b) et c) sont réalisés par phase vapeur et/ou par voie humide.

5. Procédé selon la revendication 4, **caractérisé en ce que** les dépôts des couches de l'étape a), b) et c) par phase vapeur sont réalisé parmi au moins l'une des techniques suivantes :
i) dépôt physique par phase vapeur, et plus particulièrement par évaporation sous vide, par ablation laser, par faisceau d'ions, par pulvérisation cathodique ;
ii) dépôt chimique par phase vapeur et plus particulièrement assisté par plasma, assisté par laser, ou assisté par aérosol ;
iii) électropulvérisation ;
iv) aérosol déposition.

6. Procédé selon la revendication 4, **caractérisé en ce que** les dépôts des couches de l'étape a), b) et c) par voie humide sont réalisés parmi au moins l'une des techniques suivantes :
i) électrophorèse ;
ii) sol-gel ;
iii) trempage, plus particulièrement par trempage-retrait, trempage-tournette, ou par le procédé Langmuir-Blodgett.

7. Procédé selon l'une quelconque des revendications 1 à 6, **caractérisé en ce que** le au moins un matériau de liaison Ms est sélectionné parmi un ou plusieurs des matériaux suivants :
a) les matériaux à base d'oxydes choisis parmi Li_{3,6}Ge_{0,6}V_{0,4}O₄ ; Li₂O-Nb₂O₅ ; LiSiO₄ ; Li₂O ; Liᵢ₄Zn(GeO₄)₄ ; Li₆Zr₂O₇ ; Li₈ZrO₆ ; Li_{0,35}La_{0,55}TiO₃ ; Li_{0,5}La_{0,5}TiO₃; Li₇La₃Zr₂O₁₂ ; Li₅₊ₓLa₃(Zrₓ,A₂₋ₓ)O₁₂ avec A=Sc, Ti, V, Y, Nb, Hf, Ta, Al, Si, Ga, Ge, Sn et 1,4 ≤ x ≤ 2 ;
b) les matériaux à base de nitrures ou d'oxynitrures choisis parmi Li₃N; Li₃PO₄-ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium et de phosphore appelés LiPON pouvant également contenir du silicium appelés LiSiPON, du bore appelés LiPONB, du soufre appelés LiPONS, du zirconium, ou de 'aluminium appelés LiPAON ou une combinaison d'aluminium, bore, soufre et/ou silicium ; les matériaux à base d'oxynitrures de lithium et de bore appelés LiBON pouvant également contenir du silicium appelés LiSiBON, du soufre appelés LiBONS ou de l'aluminium appelés LiBAON ou une combinaison d'aluminium, soufre et silicium ; et plus particulièrement les matériaux du type LiₓPO_{y}N_{z} avec x ∼2,8 et 2y = 3z avec 0,16 ≤ z ≤ 0,46 ; ou Li_{w}POₓN_{y}S_{z} avec (2x+3y+2z) = (5+w) et 3,2 ≤ x ≤ 3,8 ; 0,13 ≤ y ≤ 0,4 ; 0 ≤ z ≤ 0,2 ; 2,9 ≤ w ≤ 3,3 ; ou LiₜPₓAl_{y}OᵤNᵥS_{w} avec (5x+3y) =5 ; (2u+3v+2w) = (5+t) ; 2,9≤ t≤3,3 ; 0,84≤ x ≤0,94 ; 0,094≤ y ≤0,26 ; 3,2≤ u ≤3,8 ; 0,13≤ v ≤0,46 ; 0≤ w ≤0,2 ; ou Li_{1,9}Si_{0,2}P_{1,0}O_{1,1}N_{1,0} ; ou Li_{2,9}PO_{3,3}N_{0,46} ; ou Li_{6-0,75x}P_{1,75x}Zr₂₋₂ₓO_{7-y}N_{z} avec z ≤ 14/3 ; 2y = 3z et x ≤ 0,8 ; ou Li_{8-3,5x}P_{1,5x}Zr₁₋ₓO_{6-y}N_{z} avec x ≤ 0,8 ; z ≤ 4 et 2y = 3z ; ou Li₈₋₃ₓLaₓZrO_{6-y}N_{z} avec 0 < x ≤ 2 ; z ≤ 4 et 2y = 3z ; ou Li₃(Sc₂₋ₓMₓ)(PO_{4-y}N_{z}) avec x ≤ 2 ; z ≤ 8/3 ; 2y = 3z et M=AI, Y ou Al₁₋ₐYₐ avec a<1 ;
c) les matériaux à base de sulfure choisis parmi LiₓM_{1-y}M'_{y}S₄ avec M=Si, Ge, Sn et M'=P, Al, Zn, Ga, Sb ; Li₂S ; B₂S₃ ; P₂S₅ ; 70Li₂S-30P₂S₅ ; Li₇P₃S₁₁ ; Li₁₀GeP₂S₁₂ ; Li₇PS₆ ; Li_{3,25}Ge_{0,25}P_{0,75}S₄ ; Li₁₀MP₂S₁₂ avec M = Si, Ge, Sn et les mélanges entre Li₂S et un des composés parmi P₂S₅, GeS₂, Ga₂S₃ ou SiS₂ ;
d) les matériaux à base de phosphate ou de borate choisis parmi Li₃PO₄ ; LiTi(PO₄)₃ ; Li₁₊ₓAlₓM₂₋ₓ(PO₄)₃ où M = Ge, Ti, et/ou Hf et où 0 < x < 1 ; Li_{1,3}Al_{0,3}Ti_{1,7}(PO₄)₃ ; Li_{1+x+y}AlₓTi₂₋ₓSi_{y}P_{3-y}O₁₂ où 0 ≤ x ≤ 1 et 0 ≤ y ≤ 1, Li_{1+x+z}Mx(Ge_{1-y}Ti_{y})₂₋ₓSi_{z}P_{3-z}O₁₂ où 0 ≤ x ≤ 0,8, 0 ≤ y ≤ 1,0, 0 ≤ z ≤ 0,6, 2(Li_{1,4}Ti₂Si_{0,4}P_{2,6}O₁₂)-AlPO₄ ; LiₓAl_{z-y}Ga_{y}S_{w}(PO₄)_{c} ou LiₓAl_{z-y}Ga_{y}S_{w}(BO₃)_{c} ou LiₓGe_{z-y}Si_{y}S_{w}(PO₄)_{c} ou LiₓGe_{z-y}Si_{y}S_{w}(BO₃)_{c} ou d'une manière plus générale LiₓM_{z-y}M'_{y}S_{w}(PO₄)_{c} ou LiₓM_{z-y}M'_{y}S_{w}(BO₃)_{c} avec 4 < w < 20, 3 < x <10, 0 ≤ y ≤ 1, 1 ≤ z ≤ 4 et 0 < c < 20 et M ou M' un élément parmi Al, Si, Ge, Ga, P, Zn, Sb ; ou Li₃Sc₂₋ₓMₓPO₄ avec M = Al, Y ou Al₁₋ₐYₐ avec a<1 ;
e) les matériaux mixtes choisis parmi les mélanges entre Li₂S et un des composés parmi Li₃PO₄, Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les mélanges entre soit Li₂S et/ou B₂S₃, SiS₂, P₂S₅, GeS₂, Ga₂S₃ et un composé du type LiₐMO_{b} qui peut être soit un silicate de lithium Li₄SiO₄, un borate de lithium Li₃BO₃ ou un phosphate de lithium Li₃PO₄.

8. Procédé selon l'une quelconque des revendications 1 à 7, **caractérisé en ce que** le au moins un matériau de liaison Ms comporte au moins un polymère, éventuellement imprégné d'un sel de lithium, le polymère étant de préférence choisi dans le groupe formé par le polyéthylène oxyde, les polyimides, le polyfluorure de vinylidène, le polyacrylonitrile, le polyméthacrylate de méthyle, les polysiloxanes, et le sel de lithium étant de préférence choisi dans le groupe formé par LiCI, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

9. Procédé selon la revendication 8, **caractérisé en ce que** le au moins un matériau de liaison Ms est constitué d'au moins un polymère, éventuellement imprégné d'un sel de lithium, le polymère étant de préférence choisi dans le groupe formé par le polyéthylène oxyde, les polyimides, le polyfluorure de vinylidène, le polyacrylonitrile, le polyméthacrylate de méthyle, les polysiloxanes, et le sel de lithium étant de préférence choisi dais le groupe formé par LiCI, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

10. Procédé selon l'une quelconque des revendications 1 à 9, **caractérisé en ce que** l'épaisseur de la couche du au moins un matériau de liaison Ms est inférieure à 100 nm, de préférence inférieure à 50 nm, et encore plus préférentiellement inférieure à 30 nm.

11. Procédé selon l'une quelconque des revendications 1 à 10, **caractérisé en ce qu'**il comprend en outre une étape d'encapsulation de la batterie par dépôt d'au moins une couche d'encapsulation.

12. Batterie entièrement solide susceptible d'être fabriquée par le procédé selon l'une quelconque des revendications 1 à 11.

13. Batterie entièrement solide multicouches susceptible d'être fabriquée par le procédé selon l'une quelconque des revendications 1 à 11.

14. Batterie selon la revendication 12 ou 13, **caractérisée en ce qu'**elle est constituée d'un assemblage de plusieurs cellules élémentaires connectées entre elles en parallèle.

15. Batterie selon l'une quelconque des revendications 12 à 14, **caractérisée en ce que** les substrats conducteurs de courant d'anode de courant de cathode sont des feuilles métalliques, de préférence en aluminium, en cuivre ou en nickel, éventuellement revêtues d'un métal noble, ou des feuilles polymères, de préférence sélectionnées parmi les polymères suivants : le polynaphtalate d'éthylène (PEN), polytéréphtalate d'éthylène (PET), le polypropylène (PP), le Téflon® (PTFE), le polyimide (PI), et plus particulièrement le Kapton®, éventuellement revêtues d'un métal noble, ou des feuilles de graphite, éventuellement revêtues d'un métal noble, ledit métal noble étant de préférence sélectionné parmi les métaux suivants : l'or, le platine, le palladium, le vanadium, le cobalt, le nickel, le manganèse, de niobium, le tantale, le chrome, le molybdène, le titane, le zirconium, le tungstène ou tout alliage comprenant au moins un de ces métaux.

16. Batterie selon l'une quelconque des revendications 12 à 15, **caractérisée en ce qu'**elle comprend au moins une couche d'encapsulation, de préférence une couche en céramique ou en vitrocéramique et de préférence, une deuxième couche d'encapsulation déposée sur ladite première couche d'encapsulation, cette deuxième couche d'encapsulation étant de préférence en polymère siliconé.

17. Batterie selon la revendication 16, **caractérisée en ce que** ladite au moins une couche d'encapsulation revêt quatre des six faces de ladite batterie.

18. Batterie selon l'une quelconque des revendications 12 à 17, **caractérisée en ce qu'**elle comprend des terminaisons (35,36) au niveau où les collecteurs de courant cathodique, respectivement anodique, sont apparents, les terminaisons étant de préférence revêtues en outre d'une couche de nickel au contact des cellules électrochimiques, ladite couche de nickel étant revêtue d'une couche d'étain.

19. Batterie selon la revendication 18, **caractérisée en ce que** les connexions anodiques et les connexions cathodiques se trouvent sur les côtés opposés de l'empilement.

20. Batterie selon l'une quelconque des revendications 12 à 19, **caractérisée en ce qu'**elle est entièrement inorganique.

## Patentansprüche

1. Verfahren zur Herstellung von Feststoffbatterien, wobei die Batterien mindestens eine dichte Schicht umfassen, die Anodenmaterialien enthält, mindestens eine dichte Schicht, die Feststoffelektrolytmaterialien enthält, und mindestens eine dichte Schicht, die Kathodenmaterialien enthält, um eine Feststoffbatterie zu erhalten, die aus einer Zusammensetzung mehrerer Elementarzellen gebildet wird, wobei das Verfahren die folgenden Schritte umfasst:
a) Abscheiden einer dichten Anodenschicht und einer dichten Kathodenschicht jeweils auf ihrem leitfähigen Substrat, wobei die leitfähigen Substrate jeweils als Anoden- und Kathodenstromkollektor dienen können;
b) Abscheiden einer dichten Feststoffelektrolytschicht auf mindestens einer der beiden im Schritt a) erhaltenen Schichten;
c) Abscheiden einer Nanopartikelschicht mindestens eines Verbindungsmaterials Ms, vorzugsweise durch Elektrophorese auf mindestens einer der im Schritt a) und/oder b) erhaltenen dichten Schichten; wobei die Abscheidungen der Schichten aus dem Schritt a) und b) nicht allesamt durch Elektrophorese realisiert werden; wobei der Schmelzpunkt der Nanopartikelschicht des mindestens einen Verbindungsmaterials Ms niedriger als jener der Schichten ist, mit denen sie in Kontakt steht;
d) Stapeln Seite auf Seite der im Schritt c) erhaltenen Schicht mit einer im Schritt a), b) oder c) erhaltenen Schicht;
e) Durchführen einer Wärmebehandlung und/oder einer mechanischen Kompression, die den Kontakt zwischen den beiden Seite auf Seite gestapelten Schichten fördert, um eine Feststoffzusammensetzung von Elementarzellen zu erhalten, die als Batterie funktionieren kann.

2. Verfahren nach Anspruch 1, **dadurch gekennzeichnet, dass** die in Schritt e) realisierte Wärmebehandlung bei einer Temperatur T_{R} durchgeführt wird, die vorzugsweise 0,7 Mal die Schmelz- oder Zersetzungstemperatur, in °C ausgedrückt, nicht übersteigt, und bevorzugter 0,5 Mal und noch bevorzugter 0,3 Mal die Schmelz- oder Zersetzungstemperatur, in °C ausgedrückt, des mindestens einen schmelzbarsten Verbindungsmaterialmaterials Ms nicht übersteigt, das dem Wärmebehandlungsschritt unterzogen wird.

3. Verfahren nach Anspruch 1 oder 2, **dadurch gekennzeichnet, dass** die mechanische Kompression der in Schritt e) erhaltenen Zusammensetzung mit einem Druck realisiert wird, der zwischen 10 und 100 MPa, vorzugsweise zwischen 10 und 50 MPa liegt.

4. Verfahren nach einem der Ansprüche 1 bis 3, **dadurch gekennzeichnet, dass** die Abscheidungen der Schichten des Schritts a), b) und c) aus der Dampfphase und/oder durch Nassabscheidung realisiert werden.

5. Verfahren nach Anspruch 4, **dadurch gekennzeichnet, dass** die Abscheidungen der Schichten des Schritts a), b) und c) aus der Dampfphase mit mindestens einer der folgenden Techniken realisiert werden:
i) physikalische Gasphasenabscheidung, und insbesondere durch Verdampfen unter Vakuum, durch Laserabtragung, durch Ionenstrahl, durch Sputtern;
ii) chemische Gasphasenabscheidung, und insbesondere unterstützt durch Plasma, unterstützt durch Laser, oder unterstützt durch Aerosol;
iii) Elektrosprühen;
iv) Aerosolabscheidung.

6. Verfahren nach Anspruch 4, **dadurch gekennzeichnet, dass** die Abscheidungen der Schichten a), b) und c) durch Nassabscheidung mit mindestens einer der folgenden Techniken realisiert werden:
i) Elektrophorese;
ii) Sol-Gel;
iii) Eintauchen, insbesondere durch Tauchbeschichtung, Rotationsbeschichtung oder durch das Langmuir-Blodgett-Verfahren.

7. Verfahren nach einem der Ansprüche 1 bis 6, **dadurch gekennzeichnet, dass** das mindestens eine Verbindungsmaterial Ms aus einem oder mehreren der folgenden Materialien ausgewählt wird:
a) den Materialien auf Basis von Oxiden, ausgewählt aus Li_{3,6}Ge_{0,6}V_{0,4}O₄; Li₂O-Nb₂O₅; LiSiO₄; Li₂O; Li₁₄Zn (GeO₄)₄; Li₆Zr₂O₇; Li₈ZrO₆; Li_{0,35}La_{0,55}TiO₃; Li_{0,5}La_{0,5}TiO₃; Li₇La₃Zr₂O₁₂; Li₅₊ₓLa₃(Zrₓ,A₂₋ₓ)O₁₂ mit A = Sc, Ti, V, Y, Nb, Hf, Ta, Al, Si, Ga, Ge, Sn und 1,4 ≤ x ≤ 2;
b) den Materialien auf Basis von Nitriden oder Oxynitriden, ausgewählt aus Li₃N, Li₃PO₄₋xN_{2x/3}, Li₄SiO₄₋ₓN_{2x/3}, Li₄GeO₄₋ₓN_{2x/3}, mit 0 < x < 4 oder Li₃BO₃₋ₓN_{2x/3}, mit 0 < x < 3; den Materialien auf Basis von Lithium- und Phosphor-Oxynitriden, genannt LiPON, die auch Silizium, LiSiPON genannt, Bor, LiPONB genannt, Schwefel, LiPONS genannt, Zirkonium oder Aluminium, LiPAON, oder eine Kombination aus Aluminium, Bor, Schwefel und oder Silizium enthalten können; den Materialien auf Basis von Lithium- und Bor-Oxynitriden, LiBON genannt, die auch Silizium, LiSiBON genannt, Schwefel, LiBONS genannt, oder Aluminium, LiBAON genannt, oder eine Kombination aus Aluminium, Schwefel und Silizium enthalten können; und ganz besonders den Materialien des Typs LiₓPO_{y}N_{z}, mit x -2,8 und 2y = 3z, mit 0,16 ≤ z ≤ 0,46; oder Li_{w}POₓN_{y}S_{z}, mit (2x+3y+2z) = (5+w) und 3,2 ≤ x ≤ 3,8; 0,13 ≤ y ≤ 0,4; 0 ≤ z ≤ 0, 2; 2, 9 ≤ w ≤ 3, 3; oder LiₜPₓAl_{y}OᵤNᵥS_{w}, mit (5x+3y) = 5; (2u+3v+2w) = (5+t); 2,9 ≤ t ≤ 3,3; 0,84 ≤ x ≤ 0,94; 0,094 ≤ y ≤ 0,26; 3,2 ≤ u ≤ 3,8; 0,13 ≤ v ≤ 0,46; 0 ≤ w ≤ 0,2; oder Li_{1,9}Si_{0,2}P_{1,0}O_{1,1}N_{1,0}; oder Li_{2,9}PO_{3,3}N_{0,46}; oder Li_{6-0,75x}P_{1,75x}Zr₂₋₂ₓO_{7-y}N_{z}, mit z ≤ 14/3; 2y = 3z und x ≤ 0,8; oder Li_{8-3,5x}P_{1,5x}Zr₁₋ₓO_{6-y}N_{z}, mit x ≤ 0,8; z ≤ 4 und 2y = 3z; oder Li₈₋₃ₓLaₓZrO_{6-y}N_{z}, mit 0 < x ≤ 2; z ≤ 4 und 2y = 3z; oder Li₃ (Sc₂₋ₓMₓ) (PO_{4-y}N_{z}), mit x ≤ 2; z ≤ 8/3; 2y = 3z und M = Al, Y oder Al₁₋ₐYₐ, mit a < 1;
c) den Materialien auf Basis von Schwefel, ausgewählt aus LiₓM_{1-y}M'_{y}S₄, mit M=Si, Ge, Sn und M'=P, Al, Zn, Ga, Sb; Li₂S; B₂S₃; P₂S₅; 70Li₂S-30P₂S₅; Li₇P₃S₁₁; Li₁₀GeP₂S₁₂; Li₇PS₆; Li_{3,25}Ge_{0,25}P_{0,75}S₄; Li₁₀MP₂S₁₂, mit M = Si, Ge, Sn und den Gemischen zwischen Li₂S und einer der Verbindungen aus P₂S₅, GeS₂, Ga₂S₃ oder SiS₂;
d) den Materialien auf Basis von Phosphat oder Borat, ausgewählt aus Li₃PO₄; LiTi(PO₄)₃; Li₁₊ₓAlₓM₂₋ₓ (PO₄)₃, wobei M = Ge, Ti, und/oder Hf und wobei 0 < x <1; Li_{1,3}Al_{0,3}Ti_{1,7} (PO₄)₃; Li_{1+x+y}AlₓTi₂₋ₓSi_{y}P_{3-y}O₁₂, wobei 0 ≤ x ≤ 1 und 0 ≤ y ≤ 1; Li_{1+x+z}Mx (Ge_{1-y}Ti_{y})₂₋ₓSi_{z}P_{3-z}O₁₂, wobei 0 ≤ x ≤ 0, 8, 0 ≤ y ≤ 1,0, 0 ≤ z ≤ 0, 6; 2 (Li_{1,4}Ti₂Si_{0,4}P_{2,6}O₁₂) -AlPO₄; LiₓAl_{z-y}Ga_{y}S_{w}(PO₄)_{c} oder LiₓAl_{z-y}Ga_{y}S_{w}(BO₃)_{c} oder LiₓGe_{z-y}Si_{y}S_{w}(PO₄)_{c} oder LiₓGe_{z-y}Si_{y}S_{w}(BO₃)_{c} oder auf allgemeinere Weise LiₓM_{z-y}M'_{y}S_{w}(PO₄)_{c} oder LiₓM_{z-y}M'_{y}S_{w}(BO₃)_{c}, mit 4 < w < 20, 3 < x < 10, 0 ≤ y ≤ 1, 1 ≤ z ≤ 4 und 0 < c < 20 und M oder M' ein Element aus Al, Si, Ge, Ga, P, Zn, Sb; oder Li₃Sc₂₋ₓMₓPO₄ mit M = Al, Y oder Al₁₋ₐYₐ mit a<1;
e) den gemischten Materialien, ausgewählt aus den Gemischen zwischen Li₂S und einer der Verbindungen aus Li₃PO₄, Li₃PO₄₋ₓN_{2x/3}, Li₄SiO₄₋ₓN_{2x/3}, Li₄GeO₄₋ₓN_{2x/3}, mit 0 < x < 4 oder Li₃BO₃₋ₓN_{2x/3}, mit 0 < x < 3; die Gemische zwischen entweder Li₂S und/oder B₂S₃, SiS₂, P₂S₅, GeS₂, Ga₂S₃ und einer Verbindung des Typs LiₐMO_{b}, die entweder ein Lithium-Silikat Li₄SiO₄, ein Lithium-Borat Li₃BO₃ oder ein Lithium-Phosphat Li₃PO₄ sein kann.

8. Verfahren nach einem der Ansprüche 1 bis 7, **dadurch gekennzeichnet, dass** das mindestens eine Verbindungsmaterial Ms mindestens ein Polymer beinhaltet, das eventuell mit einem Lithiumsalz imprägniert ist, wobei das Polymer vorzugsweise aus der Gruppe ausgewählt wird, die durch Polyethylenoxid, Polyimide, Polyvinylidenfluorid, Polyacronitril, Polymethylmethacrylat, Polysiloxanen gebildet wird, und das Lithiumsalz vorzugsweise aus der Gruppe ausgewählt wird, die durch LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃) gebildet wird.

9. Verfahren nach Anspruch 8, **dadurch gekennzeichnet, dass** das mindestens eine Verbindungsmaterial Ms aus mindestens einem Polymer gebildet ist, das eventuell mit einem Lithiumsalz imprägniert ist, wobei das Polymer vorzugsweise aus der Gruppe ausgewählt wird, die durch Polyethylenoxid, Polyimide, Polyvinylidenfluorid, Polyacronitril, Polymethylmethacrylat, Polysiloxanen gebildet wird, und das Lithiumsalz vorzugsweise aus der Gruppe ausgewählt wird, die durch LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃) gebildet wird.

10. Verfahren nach einem der Ansprüche 1 bis 9, **dadurch gekennzeichnet, dass** die Dicke der Schicht des mindestens einen Verbindungsmaterials Ms kleiner als 100 nm, vorzugsweise kleiner als 50 nm, und noch bevorzugter kleiner als 30 nm ist.

11. Verfahren nach einem der Ansprüche 1 bis 10, **dadurch gekennzeichnet, dass** es weiter einen Einkapselungsschritt der Batterie durch Abscheiden mindestens einer Einkapselungsschicht umfasst.

12. Feststoffbatterie, die durch das Verfahren nach einem der Ansprüche 1 bis 11 herstellbar ist.

13. Mehrschichtige Feststoffbatterie, die durch das Verfahren nach einem der Ansprüche 1 bis 11 herstellbar ist.

14. Batterie nach Anspruch 12 oder 13, **dadurch gekennzeichnet, dass** sie durch eine Zusammenstellung mehrerer Elementarzellen gebildet wird, die parallel miteinander verbunden werden.

15. Batterie nach einem der Ansprüche 12 bis 14, **dadurch gekennzeichnet, dass** die leitfähigen Substrate eines Anodenstroms oder Kathodenstroms Metallfolien, vorzugsweise aus Aluminium, aus Kupfer oder aus Nickel sind, die eventuell mit einem Edelmetall oder mit Polymerfolien überzogen sind, die vorzugsweise aus den folgenden Polymeren ausgewählt sind: Polyethylennaphtalat (PEN), Polyethylenterephtalat (PET), Polypropylen (PP), Tetlon® (PTFE), Polyimid (PI), und insbesondere Kapton®, eventuell mit einem Edelmetall oder mit Graphitfolien überzogen, die eventuell mit einem Edelmetall überzogen sind, wobei das Edelmetall vorzugsweise aus den folgenden Metallen ausgewählt wird: Gold, Platin, Palladium, Vanadium, Kobalt, Nickel, Mangan, Niob, Tantal, Chrom, Molybdän, Titan, Zirkonium, Wolfram, oder jede Legierung, die mindestens eines dieser Metalle umfasst.

16. Batterie nach einem der Ansprüche 12 bis 15, **dadurch gekennzeichnet, dass** sie mindestens eine Einkapselungsschicht, vorzugsweise eine Schicht aus Keramik oder aus Glaskeramik, und vorzugsweise eine zweite Einkapselungsschicht umfasst, die auf der ersten Einkapselungsschicht abgeschieden wird, wobei diese zweite Einkapselungsschicht vorzugsweise aus Silikonpolymer ist.

17. Batterie nach Anspruch 16, **dadurch gekennzeichnet, dass** die mindestens eine Einkapselungsschicht vier der sechs Seiten der Batterie überzieht.

18. Batterie nach einem der Ansprüche 12 bis 17, **dadurch gekennzeichnet, dass** sie Endungen (35, 36) in dem Bereich umfasst, in dem die Kathoden-, bzw. Anodenstromkollektoren offenliegend sind, wobei die Endungen vorzugsweise weiter mit einer Schicht aus Nickel in Kontakt mit den elektrochemischen Zellen überzogen sind, wobei die Schicht aus Nickel mit einer Schicht aus Zinn überzogen ist.

19. Batterie nach Anspruch 18, **dadurch gekennzeichnet, dass** sich die Anodenanschlüsse und die Kathodenanschlüsse an den gegenüberliegenden Seiten der Stapelung befinden.

20. Batterie nach einem der Ansprüche 12 bis 19, **dadurch gekennzeichnet, dass** sie vollkommen anorganisch ist.

## Claims

1. A method for manufacturing all solid-state batteries, said batteries comprising at least one dense layer containing anode materials, at least one dense layer containing solid electrolyte materials, and at least one dense layer containing cathode materials to obtain an all solid-state battery consisting of an assembly of several elementary cells, method comprising the following steps:
a) a dense anode layer and a dense cathode layer are each deposited on its conductive substrate, said conductive substrates being able to serve as anode and cathode current collector respectively;
b) a dense layer of solid electrolyte is deposited on at least one of the two layers obtained in step a);
c) a layer of nanoparticles of at least one bonding material Ms is deposited, preferably by electrophoresis, on at least one of the dense layers obtained in step a) and/or b); it being understood that the deposition of the layers of step a) and b) are not all carried out by electrophoresis; the melting point of the layer of nanoparticles of said at least one bonding material Ms being lower than that of the layers with which it is in contact;
d) the layer obtained in step c) is stacked face to face with a layer obtained in step a), b) or c);
e) a heat treatment and/or mechanical compression is carried out, promoting contact between said two layers stacked face to face, in order to obtain an all solid-state assembly of elementary cells capable of operating as a battery.

2. The method according to claim 1, **characterised in that** the heat treatment carried out in step e) is performed at a temperature T_{R} which, preferably, does not exceed 0.7 times the melting or decomposition temperature expressed in °C, and more preferably does not exceed 0.5 times and even more preferably does not exceed 0.3 times the melting or decomposition temperature expressed in °C of the at least one material of the most fusible bonding material Ms subjected to said heat treatment step.

3. The method according to claim 1 or 2, **characterised in that** the mechanical compression of the assembly obtained in step e) is carried out at a pressure comprised between 10 and 100 MPa, preferably between 10 and 50 MPa.

4. The method according to any one of claims 1 to 3, **characterised in that** the deposition of the layers of step a), b) and c) are carried out by vapour phase and/or by wet-process.

5. The method according to claim 4, **characterised in that** the depositions of the layers of step a), b) and c) by vapour phase are carried out using at least one of the following techniques:
i) physical vapour deposition and more particularly by vacuum evaporation, by laser ablation, by ion beam, by cathode spraying;
ii) chemical vapour deposition, and more particularly assisted by plasma, assisted by laser, or assisted by aerosol;
iii) electrospray;
iv) deposition aerosol.

6. The method according to claim 4, **characterised in that** the depositions of the layers of step a), b) and c) by wet-process are carried out using at least one of the following techniques:
i) electrophoresis;
ii) sol-gel;
iii) dipping, more particularly by dip-coating, spin-coating, or by the Langmuir-Blodgett method.

7. The method according to any one of claims 1 to 6, **characterised in that** the at least one bonding material Ms is selected from one or more of the following materials:
a) the oxide-based materials selected from Li_{3.6}Ge_{0.6}V_{0.4}O₄; Li₂O-Nb₂O₅; LiSiO₄; Li₂O; Li₁₄Zn (GeO₄)₄; Li₆Zr₂O₇; Li₃ZrO₆; Li_{0.35}La_{0.55}TiO₃; Li_{0.5}La_{0.5}TiO₃; Li₇La₃Zr₂O₁₂; Li₅₊ₓLa₃(Zrₓ, A₂₋x)O₁₂ with A = Sc, Ti, V, Y, Nb, Hf, Ta, Al, Si, Ga, Ge, Sn and 1.4 ≤ x ≤ 2;
b) the nitride or oxynitride-based materials selected from Li₃N; Li₃PO₄₋ₓN_{2x/3}, Li₄SiO₄₋ₓN_{2x/3}, Li₄GeO₄₋ₓN_{2x/3} with 0 <x <4 or Li₃BO₃₋ₓN_{2x/3} with 0 < x <3; lithium and phosphorus oxynitride-based materials called LiPON which may also contain silicon called LiSiPON, boron called LiPONB, sulphur called LiPONS, zirconium, or aluminium called LiPAON or a combination of aluminium, boron, sulphur and/or silicon; lithium and boron oxynitride-based materials called LiBON which may also contain silicon called LiSiBON, sulphur called LiBONS or aluminium called LiBAON or a combination of aluminium, sulphur and silicon; and more particularly materials of the type LiₓPO_{y}N_{z} with x -2.8 and 2y = 3z with 0.16 ≤ z ≤ 0.46; or Li_{w}POₓN_{y}S_{z} with (2x+3y+2z) = (5+w) and 3.2 ≤ x ≤ 3.8; 0.13 ≤ y ≤ 0.4; 0 ≤ z ≤ 0.2; 2.9 ≤ w ≤ 3.3; or LiₜPₓAl_{y}OᵤNᵥS_{w} with (5x+3y)=5; (2u+3v+2w) = (5+t); 2.9≤ t ≤3.3; 0.84≤ x ≤0.94; 0.094≤ y ≤0.26; 3.2≤ u ≤3.8; 0.13≤ v ≤0.46; 0≤ w ≤0.2; or Li_{1.9}Si_{0.2}P_{1.0}O_{1.1}N_{1.0} or Li_{2.9}PO_{3.3}N_{0.46} or Li_{6-0.75x}P_{1.75x}Zr₂₋₂ₓO_{7-y}N_{z} with z ≤ 14/3; 2y = 3z and x ≤ 0.8; or Li_{8-3.5x}P_{1.5x}Zr₁₋ₓO_{6-y}N_{z} with x ≤ 0.8; z ≤ 4 and 2y = 3z; or Li₈₋₃ₓLaₓZrO_{6-y}N_{z} with 0 < x ≤ 2; z ≤ 4 and 2y = 3z; or Li₃(Sc₂₋ₓMₓ)(PO_{4-y}N_{z}) with x ≤ 2; z ≤ 8/3; 2y = 3z and M = Al, Y or Al₁₋ₐYₐ with a<1;
c) the sulfide-based materials selected from LiₓM_{1-y}M'_{y}S₄ with M=Si, Ge, Sn and M'=P, Al, Zn, Ga, Sb; Li₂S; B₂S₃; P₂S₅; 70Li₂S-30P₂S₅; Li₇P₃S₁₁; Li₁₀GeP₂S₁₂; Li₇PS₆; Li_{3.25}Ge_{0.25}P_{0.75}S₄; Li₁₀MP₂S₁₂ with M = Si, Ge, Sn and the mixtures between Li₂S and one of the compounds among P₂S₅, GeS₂, Ga₂S₃ or SiS₂;
d) the phosphate or borate-based materials selected from Li₃PO₄; LiTi(PO₄)₃; Li₁₊ₓAlₓM₂₋ₓ(PO₄)₃ where M = Ge, Ti, and/or Hf and where 0 < x < 1; Li_{1.3}Al_{0.3}Ti_{1.7}(PO₄)₃; Li_{1+x+y}AlₓTi₂₋ₓSi_{y}P_{3-y}O₁₂ where 0 ≤ x ≤ 1 and 0 ≤ y ≤ 1; Li_{1+x+z}Mₓ(Ge_{1-y}Ti_{y})₂₋ₓSi_{z}P_{3-z}O₁₂ where 0 ≤ x ≤ 0.8, 0 ≤ y ≤ 1.0, 0 ≤ z ≤ 0.6; 2(Li_{1.4}Ti₂Si_{0.4}P_{2.6}O₁₂) -AlPO₄, LiₓAl_{z-y}Ga_{y}S_{w}(PO₄)_{c} or LiₓAl_{z-y}Ga_{y}S_{w}(BO₃)_{c} or LiₓGe_{z-y}Si_{y}S_{w}(PO₄)_{c} or LiₓGe_{z-y}Si_{y}S_{w}(BO₃)_{c} or more generally LiₓM_{z-y}M'_{y}S_{w}(PO4)_{c} or LiₓM_{z-y}M'_{y}S_{w}(BO₃)_{c} with 4 < w < 20, 3 < x <10, 0≤ y ≤ 1, 1≤ z ≤ 4 and 0 <c <20 and M or M' an element from Ai, Si, Ge, Ga, P, Zn, Sb; or Li₃Sc₂₋ₓMₓPO₄ with M = Al, Y or Al₁₋ₐYₐ with a <1;
e) the mixed materials selected from the mixtures between Li₂S and one of the compounds from Li₃PO₄, Li₃PO₄₋ₓN_{2x/3}, Li₄SiO₄₋ₓN_{2x/3}, Li₄GeO₄₋ₓN_{2x/3} with 0 <x <4 or Li₃BO₃₋ₓN_{2x/3} with 0 < x <3; mixtures between either Li₂S and/or B₂S₃, SiS₂, P₂S₅, GeS₂, Ga₂S₃ and a compound of the LiₐMO_{b} type which can be either a lithium silicate Li₄SiO₄, a lithium borate Li₃BO₃ or a lithium phosphate Li₃PO₄.

8. The method according to any one of claims 1 to 7, **characterised in that** the at least one bonding material Ms includes at least one polymer, optionally impregnated with a lithium salt, the polymer preferably being selected from the group formed by polyethylene oxide, polyimides, polyvinylidene fluoride, polyacrylonitrile, polymethyl methacrylate, polysiloxanes, and the lithium salt being preferably selected from the group formed by LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

9. The method according to claim 8, **characterised in that** the at least one bonding material Ms consists of at least one polymer, optionally impregnated with a lithium salt, the polymer preferably being selected from the group formed by the polyethylene oxide, polyimides, vinylidene polyfluoride, polyacrylonitrile, polymethyl methacrylate, polysiloxanes, and the lithium salt preferably being selected from the group formed by LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆Hₛ)₄)Li(SCN), Li(NO₃).

10. The method according to any one of claims 1 to 9, **characterised in that** the thickness of the layer of the at least one bonding material Ms is less than 100 nm, preferably less than 50 nm, and even more preferably less than 30 nm.

11. The method according to any one of claims 1 to 10, **characterised in that** it further comprises a step of encapsulating the battery by depositing at least one encapsulating layer.

12. An all solid-state battery capable of being manufactured by the method according to any one of claims 1 to 11.

13. The all solid-state multilayer battery capable of being manufactured by the method according to any one of claims 1 to 11.

14. The battery according to claim 12 or 13, **characterised in that** it consists of an assembly of several elementary cells connected to each other in parallel.

15. The battery according to any one of claims 12 to 14, **characterised in that** the conducting substrates of the anode current of the cathode current are metallic sheets, preferably made of aluminium, copper or nickel, optionally coated with a noble metal, or polymer sheets, preferably selected from the following polymers: ethylene polynaphthalate (PEN), polyethylene terephthalate (PET), polypropylene (PP), Teflon® (PTFE), polyimide (PI), and more particularly Kapton®, optionally coated with a noble metal, or graphite sheets, optionally coated with a noble metal, said noble metal being preferably selected from the following metals: gold, platinum , palladium, vanadium, cobalt, nickel, manganese, niobium, tantalum, chromium, molybdenum, titanium, zirconium, tungsten or any alloy comprising at least one of these metals.

16. The battery according to any one of claims 12 to 15, **characterised in that** it comprises at least one encapsulation layer, preferably a ceramic or glass-ceramic layer and preferably, a second encapsulation layer deposited on said first encapsulation layer, this second encapsulation layer preferably being made of silicone polymer.

17. The battery according to claim 16, **characterised in that** said at least one encapsulation layer covers four of the six faces of said battery.

18. The battery according to any one of claims 12 to 17, **characterised in that** it comprises terminations (35,36) at the area where the cathode, respectively anode, current collectors are visible, the terminations being preferably further coated with a nickel layer in contact with the electrochemical cells, said nickel layer being coated with a layer of tin.

19. The battery according to claim 18, **characterised in that** the anode connections and the cathode connections are on the opposite sides of the stack.

20. The battery according to any one of claims 12 to 19, **characterised in that** it is entirely inorganic.
